# EUROPEAN PATENT APPLICATION

(11) **EP 4 727 227 A1**
(43) Date of publication of application: **15.04.2026**
(21) Application number: 24853395.2
(22) Date of filing: 28.06.2024
(51) Int. Cl.: H04W 60/00

(54) **DEVICE REGISTRATION METHOD, DEVICE, AND SYSTEM**

(30) Priority: 16.08.2023 CN 202311041465
(71) Applicant: Huawei Technologies Co., Ltd., Shenzhen, Guangdong 518129 (CN)
(72) Inventor: YAN, Guoqi, Shenzhen, Guangdong 518129 (CN); LIU, Fang, Shenzhen, Guangdong 518129 (CN)
(74) Representative: Goddar, Heinz J.
(86) International application number: PCT/CN2024/102449
(87) International publication number: WO 2025/035980

(57) **Abstract**

A device registration method and system, and a device are disclosed, and relate to the field of terminal technologies, so as to improve a network configuration success rate of a terminal. The method includes: A first terminal receives a first operation entered by a user, where the first operation is used to register a second terminal, and the second terminal is a terminal that supports a first connection mode and a second connection mode; obtains first network connection information required for registering the second terminal, where the first network connection information is used to indicate the second terminal to connect to a network in the first connection mode; and sends the first network connection information to the second terminal in the second connection mode. In this way, when the second terminal has network access, it may autonomously connect to the network based on the first network connection information without the need to re-register the second terminal. The method eliminates a requirement for the second terminal to have a network connection when the second terminal is registered, thereby improving a network configuration success rate of the second terminal.

## Description

This application claims priority to Chinese Patent Application No. 202311041465.7, filed with the China National Intellectual Property Administration on August 16, 2023 and entitled "DEVICE REGISTRATION METHOD AND SYSTEM, AND DEVICE", which is incorporated herein by reference in its entirety.

### TECHNICAL FIELD

This application relates to the terminal field, and in particular, to a device registration method and system, and a device.

### BACKGROUND

Currently, types and a quantity of smart devices that can be used by a user increase. In a process of using the smart device, the user needs to perform network configuration on the smart device. For example, a mobile phone configures a wireless fidelity (wireless fidelity, Wi-Fi) network for a door lock. The mobile phone establishes a Bluetooth connection to the door lock, and the mobile phone and the door lock are connected through Bluetooth. The mobile phone may display a network configuration interface via an installed smart home application, and the user triggers a network configuration procedure of the door lock by controlling the network configuration interface. Currently, in the network configuration procedure, the door lock needs to obtain required network configuration information from a server, to complete network configuration.

In some scenarios, network quality between the door lock and the server is poor, or the door lock cannot be connected to the network. As a result, it is difficult for the door lock to obtain the required network configuration information from the server, causing a network configuration failure. It can be learned that a probability of the network configuration failure is high according to a current network configuration method.

### SUMMARY

This application provides a device registration method and system, and a device, to improve a network configuration success rate.

To achieve the foregoing objective, this application uses the following technical solutions.

According to a first aspect, a technical solution of this application provides a device registration method. The method may be applied to a first terminal or a component (for example, a chip system) that supports a function of the first terminal. The method includes: receiving a first operation entered by a user, where the first operation is used to register a second terminal, and the second terminal is a terminal that supports a first connection mode and a second connection mode; obtaining first network connection information required for registering the second terminal, where the first network connection information is used to indicate the second terminal to connect to a network in the first connection mode; and sending the first network connection information to the second terminal in the second connection mode.

In a related technology, the second terminal is not connected to a network during initial registration and needs to perform a registration procedure again for subsequent network connection. In this method, the first terminal may act as a proxy of the second terminal to obtain the first network connection information required for registering the second terminal, and deliver the first network connection information to the second terminal in the second connection mode. After obtaining the first network connection information, the second terminal may complete a registration procedure, and normal use (for example, used as a common BLE device) of the second terminal is not affected. In this way, when the second terminal has network access, the second terminal may autonomously connect to the network based on the first network connection information, without the need to re-register the second terminal. The method eliminates a requirement for the second terminal to have a network connection when the second terminal is registered, thereby improving a network configuration success rate of the second terminal.

In a possible design, the first network connection information includes activation information used to activate the second terminal.

In other words, information used for registration and information used for activation may be sent to the second terminal together. For example, the information used for registration and the information used for activation may be sent to the second terminal through one packet.

Alternatively, after sending the first network connection information to the second terminal in the second connection mode, the method further includes: obtaining, from a server, second network connection information required for activating the second terminal; and sending the second network connection information to the second terminal in the second connection mode. In other words, the information used for registration and the information used for activation may be sent to the second terminal on different occasions or under different conditions. For example, the first network connection information used for registration is first sent to the second terminal through one packet, and then the second network connection information used for activation is sent to the second terminal through another packet.

In the method, it can be ensured that the second terminal obtains the required network connection information from the first terminal in the first connection mode, to complete activation of the second terminal. This does not affect subsequent network connection use of the door lock, and significantly improves use experience of the second terminal like the door lock. In addition, in a process of activating the second terminal, the second terminal does not need to have network access, so that dependency on a network connection status of an environment in which the second terminal is located is reduced, expanding an application scenario.

In a possible design, the method further includes: presenting prompt information, where the prompt information is used to prompt that the second terminal has been registered and/or activated.

In the method, after successfully delivering, to the second terminal, the network connection information required for registration of the second terminal, the first terminal does not need to wait for real network connection of the second terminal, and displays prompt information indicating that registration and/or activation succeeds in time, so that the user learns of a network configuration status of the second terminal in time. This improves human-machine interaction experience. For example, there is no need to wait for completion of percentage progress of network configuration in the related technology.

In a possible design, the first network connection information further includes information about an access point, or the second network connection information further includes information about the access point.

The information about the access point is used to indicate the second terminal to connect to the access point used for network connection.

Optionally, the information about the access point may be obtained by the first terminal from the server, or obtained by the first terminal from the access point, or obtained from another device (for example, a hub device of a whole house). This is not limited.

In a possible design, in a wireless fidelity Wi-Fi network, the information about the access point includes at least one piece of the following information: a service set identifier SSID of the access point and a password of the access point; and in a data network, the information about the access point includes at least one piece of the following information: a key and a user identifier.

In a possible design, after sending the first network connection information to the second terminal in the second connection mode, the method further includes:
receiving a first message from the second terminal, where the first message is used to request information about an updated access point; and
sending the information about the updated access point to the second terminal.

In the method, after the information about the access point changes, the second terminal fails to connect to the network, and the second terminal may request the information about the updated access point from the first terminal, and receive the information about the updated access point from the first terminal. In this way, the information about the access point does not need to be updated by re-registering with the second terminal, and the information about the access point required by the second terminal for network connection can be quickly updated. This improves network connection efficiency of the second terminal.

Optionally, in some other scenarios, the first terminal may actively send the information about the updated access point to the second terminal after obtaining the information about the updated access point.

In a possible design, after receiving the first message from the second terminal, the method further includes:
presenting a first interface;
receiving the information about the access point entered by the user in the first interface; and
sending the information about the updated access point to the second terminal includes: sending the information about the access point entered by the user to the second terminal.

In the method, after receiving the first message of the second terminal, the first terminal displays the first interface, so that the user can enter the information about the access point through the first interface, and the first terminal sends the information about the access point entered by the user to the second terminal, so that the second terminal uses the information about the updated access point to quickly connect to the access point. In this process, the first terminal does not need to update the information about the access point for the second terminal by using a registration procedure of the second terminal again. This shortens time consumed due to re-registration, and improves network connection efficiency of the second terminal.

In a possible design, after sending the first network connection information to the second terminal in the second connection mode, the method further includes:
determining a network status of the second terminal; and
based on the network status of the second terminal, switching from the first connection mode to the second connection mode to be connected to the second terminal, or switching from the second connection mode to the first connection mode to be connected to the second terminal.

In a related technology, if the second terminal initially registers as a common BLE device, re-registration further needs to be performed to obtain an activation key, so as to switch a transmission channel between the second terminal and the first terminal. In the method, if the second terminal does not have network access during initial registration, the second terminal may be registered as a common device (for example, a common BLE device) for use. Then, the first terminal may autonomously switch the transmission channel between the first terminal and the second terminal based on the network status of the second terminal, transmission channel switching can be implemented without performing a complex re-registration procedure for the second terminal, so that a procedure can be simplified, and switching efficiency can be improved.

In a possible design, the method further includes:
sending a message for the second terminal to the server in the first connection mode; and
receiving a response for the message for the second terminal from the server in the first connection mode.

Optionally, the message may be a control message or a status synchronization message, for example, a door lock being pried open, or brushing data of a toothbrush.

Optionally, in some other scenarios, after sending the message to the server, the first terminal may not receive or does not receive a response for the message.

In a possible design, the method further includes:
sending a message to the second terminal in the second connection mode; and
receiving a response for the message from the second terminal.

In a possible design, based on the network status of the second terminal, switching from the first connection mode to the second connection mode to be connected to the second terminal includes:
when the network status of the second terminal meets a first condition, switching from the second connection mode to the first connection mode to be connected to the second terminal; and/or
based on the network status of the second terminal, switching from the first connection mode to the second connection mode to be connected to the second terminal includes:
   when the network status of the second terminal does not meet the first condition, switching from the first connection mode to the second connection mode to be connected to the second terminal, where the first condition includes at least one of the following conditions: the second terminal can connect to the server, and network quality between the second terminal and the server is higher than a threshold.

In the method, the first terminal may intelligently switch the transmission channel between the first terminal and the second terminal based on whether the network status of the second terminal meets the first condition, and can switch the transmission channel without performing a complex re-registration procedure. This can simplify the procedure and improve switching efficiency.

Optionally, the network quality is related to at least one of the following network parameters: a throughput, a packet loss rate, and a transmission rate. The network parameter related to the network quality may alternatively be another network parameter. This is not limited.

In a possible design, the method further includes:
displaying a second interface, where the second interface includes a first control; and
detecting an operation performed by the user on the first control, and enabling a proxy registration function and/or a proxy activation function.

In this way, the proxy registration and/or activation function can be intelligently enabled, so that the first terminal has functions of performing proxy registration and activating the second terminal. This helps improve network configuration efficiency of the second terminal.

In a possible design, the first message includes a broadcast message or a multicast message based on the second connection mode.

In this way, based on the broadcast or multicast message, the second terminal can trigger a terminal (for example, the first terminal) that receives the broadcast or multicast to deliver the information about the updated access point, so that the second terminal is connected to a network for use.

In a possible design, the first network connection information further includes registration information of the second terminal, or the second network connection information further includes registration information of the second terminal; and the registration information includes a device identifier allocated by the server to the second terminal.

In a possible design, the activation information includes an activation key.

In a possible design, the first connection mode includes any one of the following connection modes: the Wi-Fi network and the data network; and/or
the second connection mode includes a near field connection mode, and the near field connection mode includes any one of the following connection modes: Bluetooth and near field communication NFC.

The first connection mode may be further referred to as a network connection mode, and may be used by the second terminal to connect to a network. The first connection mode is not limited to the several connection modes listed above. Another connection mode that can be used for network connection may also be referred to as a first connection mode. For example, with evolution of technologies, all connection modes that can be used for network connection in a system such as 5G or 6G may be referred to as a first connection mode. The second connection mode is not limited to the several connection modes listed above, and may further include another near field connection mode, used by the first terminal to deliver network connection information to the second terminal in time.

According to a second aspect, a device registration method is provided. The method may be applied to a second terminal or a component (for example, a chip system) that supports a function of the second terminal. The second terminal is a terminal that supports a first connection mode and a second connection mode. The method includes:
receiving, from a first terminal in the second connection mode, first network connection information required for registering the second terminal; and
connecting to a network in the first connection mode based on the first network connection information.

In a possible design, the first network connection information includes activation information used to activate the second terminal; or
after receiving, from the first terminal in the second connection mode, the first network connection information required for registering the second terminal, the method further includes:
receiving, from the first terminal in the second connection mode, second network connection information required for activating the second terminal.

In a possible design, the first network connection information further includes information about an access point, or the second network connection information further includes information about the access point.

The information about the access point is used to indicate the second terminal to connect to the access point used for network connection.

In a possible design, in a Wi-Fi network, the information about the access point includes at least one piece of the following information: a service set identifier SSID of the access point and a password of the access point; and in a data network, the information about the access point includes at least one piece of the following information: a key and a user identifier.

In a possible design, the method further includes: when failing to connect to a network in the first connection mode, sending a first message, where the first message is used to request information about an updated access point; and receiving the information about the updated access point from the first terminal.

In a possible design, the method further includes: determining a network status of the second terminal; and based on the network status of the second terminal, switching from the first connection mode to the second connection mode to be connected to the first terminal, or switching from the second connection mode to the first connection mode to be connected to the first terminal.

In some designs, for some important data that needs to be exchanged, ideally, a server may perform a corresponding processing measure through server interaction. For example, when a door lock is pried open, the door lock reports a status to the server in the first connection mode, and the server performs a corresponding security protection measure.

In a possible design, based on the network status of the second terminal, switching from the first connection mode to the second connection mode to be connected to the first terminal includes:
when the network status of the second terminal meets a first condition, switching from the second connection mode to the first connection mode to be connected to the first terminal; and/or
based on the network status of the second terminal, switching from the first connection mode to the second connection mode to be connected to the first terminal includes:
   when the network status of the second terminal does not meet the first condition, switching from the first connection mode to the second connection mode to be connected to the first terminal, where the first condition includes at least one of the following conditions: the second terminal can connect to the server, and network quality between the second terminal and the server is higher than a threshold.

In a possible design, the first message includes a broadcast message or a multicast message based on the second connection mode.

In a possible design, the first network connection information further includes registration information of the second terminal, or the second network connection information further includes registration information of the second terminal; and the registration information includes a device identifier allocated by the server to the second terminal.

In a possible design, the activation information includes an activation key.

In a possible design, the first connection mode includes any one of the following connection modes: the wireless fidelity Wi-Fi network and the data network.

The second connection mode includes a near field connection mode, and the near field connection mode includes any one of the following connection modes: Bluetooth and near field communication NFC.

The foregoing mainly uses an example in which the first terminal acts as a proxy of the second terminal to perform registration and activation. In some other designs, the first terminal may determine the network status of the second terminal. If the second terminal has network access, the second terminal autonomously performs registration and activation. If the second terminal has no network access, the first terminal acts as a proxy of the second terminal to perform registration and activation.

According to a third aspect, a technical solution of this application provides a device, including an input device, a display, one or more processors, a memory, and one or more computer programs. The processor is coupled to the input device, the processor, and the memory, the one or more computer programs are stored in the memory, and when the electronic device runs, the processor executes the one or more computer programs stored in the memory, so that the electronic device performs the method in any design of any one of the foregoing aspects.

According to a fourth aspect, this application provides a terminal, where the terminal includes a processor and a memory, the memory is configured to store computer program code, the computer program code includes computer instructions, and when the processor executes the computer instructions, the method in any possible design of any one of the foregoing aspects of this application is performed.

According to a fifth aspect, a technical solution of this application provides a computer-readable storage medium, including computer instructions. When the computer instructions are run on a device, the device is enabled to perform the method in any possible design of any one of the foregoing aspects.

According to a sixth aspect, a technical solution of this application provides a computer program product. When the computer program product runs on a device, the device is enabled to perform the method in any possible design of any one of the foregoing aspects.

According to a seventh aspect, a technical solution of this application provides a device registration system. The system includes the first terminal and the second terminal in any possible design of any one of the foregoing aspects.

### BRIEF DESCRIPTION OF DRAWINGS

FIG. 1A is a diagram of a device registration method according to a related technology;
FIG. 1B(a) to FIG. 1B(d) and FIG. 1C are diagrams of interfaces of a device registration method according to a related technology;
FIG. 1D and FIG. 1E each are a diagram of a scenario of a device registration method according to a related technology;
FIG. 2 is a diagram of an architecture of a system according to an embodiment of this application;
FIG. 3 is a diagram of an architecture of a system according to an embodiment of this application;
FIG. 4 is a diagram of an architecture of a system according to an embodiment of this application;
FIG. 5 is a diagram of a structure of a device according to an embodiment of this application;
FIG. 6 is a diagram of scenarios of a device registration method according to an embodiment of this application;
FIG. 7 is a schematic flowchart of a device registration method according to an embodiment of this application;
FIG. 8 is a diagram of interfaces according to an embodiment of this application;
FIG. 9 to FIG. 11 each are a schematic flowchart of a device registration method according to an embodiment of this application;
FIG. 12(a) and FIG. 12(b) each are a diagram of a scenario and an interface according to an embodiment of this application;
FIG. 13 is a schematic flowchart of a device registration method according to an embodiment of this application;
FIG. 14(a) to FIG. 14(c) each are a diagram of an interface according to an embodiment of this application;
FIG. 15 is a schematic flowchart of a device registration method according to an embodiment of this application;
FIG. 16 is a diagram of an interface according to an embodiment of this application;
FIG. 17 is a schematic flowchart of a device registration method according to an embodiment of this application;
FIG. 18 is a diagram of scenarios according to an embodiment of this application;
FIG. 19 is a diagram of a structure of a device registration apparatus according to an embodiment of this application; and
FIG. 20 is a diagram of a structure of a chip system according to an embodiment of this application.

### DESCRIPTION OF EMBODIMENTS

In the specification and accompanying drawings of this application, terms such as "first" and "second" are intended to distinguish between different objects or distinguish between different processing on a same object. Words such as "first" and "second" may distinguish between same items or similar items that provide basically same functions and purposes. For example, a first terminal and a second terminal are merely intended to distinguish between different devices, and do not limit a sequence thereof. A person skilled in the art may understand that terms such as "first" and "second" do not limit a quantity and a sequence, and the terms such as "first" and "second" do not indicate a definite difference.

"At least one" means one or more, and "a plurality of" means two or more.

The term "and/or" describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, the terms "including", "having", or any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term like "example" or "for example" is intended to present a related concept in a specific manner.

First, related technologies in embodiments of this application are described.

### 1. Multimode device

With popularization of a current internet of things (internet of things, IoT) technology, there are an increasing quantity of devices using a plurality of communication protocols. Such devices may be referred to as multimode devices. For example, a device like a door lock or a printer that supports a Bluetooth low energy (Bluetooth low energy, BLE) protocol and a Wi-Fi protocol, or an outdoor device like a bicycle or a scooter that supports a BLE protocol and a cellular protocol (for example, a 4G or 5G network protocol) may be referred to as a dual-mode device.

### 2. Network configuration procedure of a multimode device

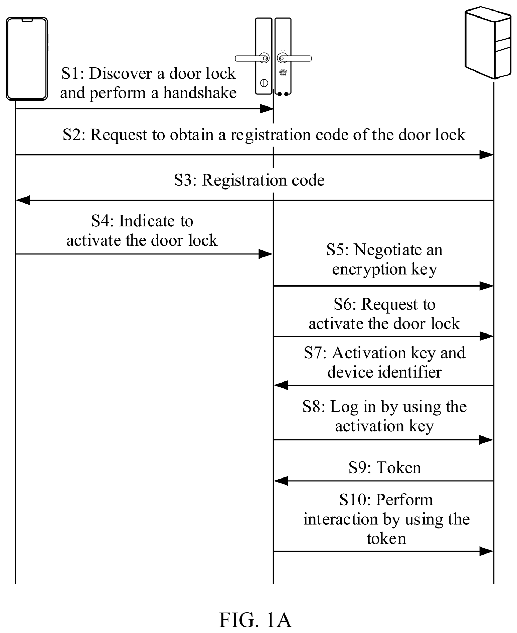

A related technology provides a method for network configuration of the multimode device. For example, a mobile phone configures a network for a door lock. As shown in FIG. 1A, the method may include the following steps.

S1: The mobile phone discovers the door lock and performs a handshake.

S2: The mobile phone requests to obtain a registration code of the door lock from a server.

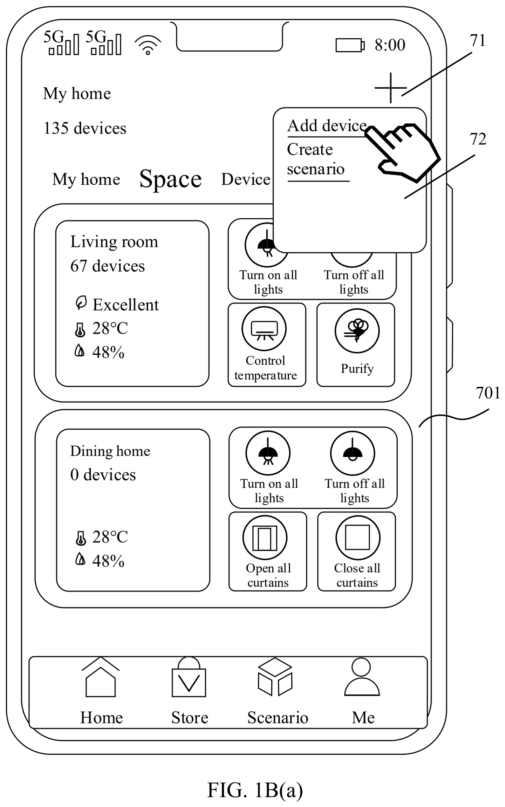

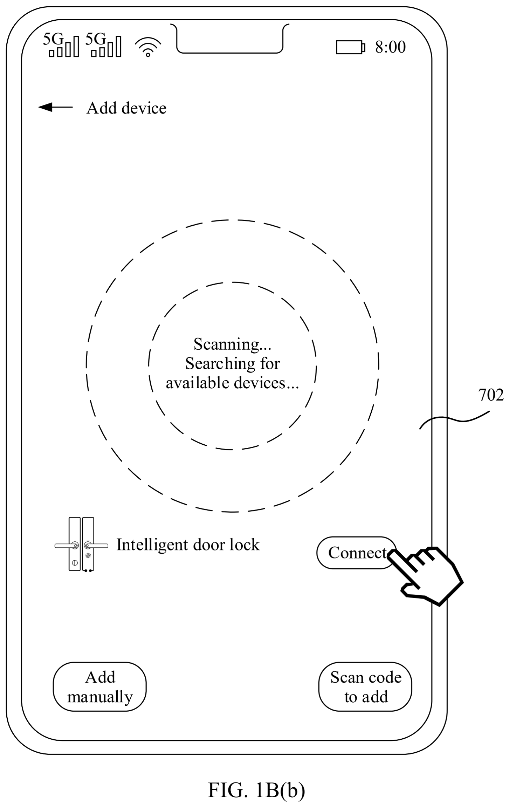

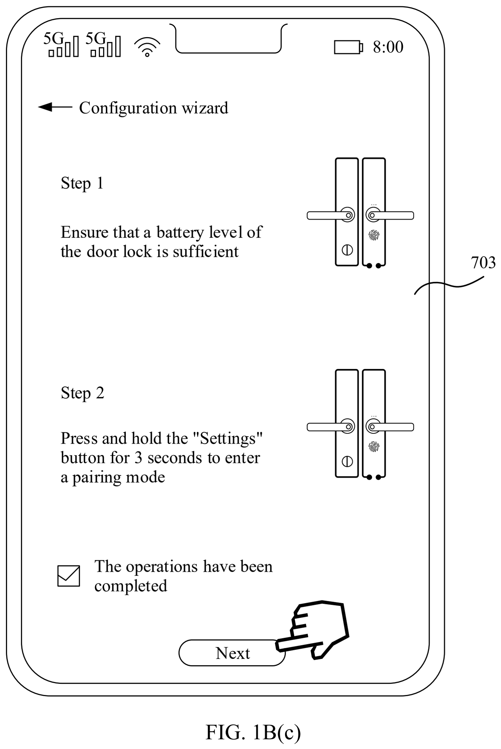

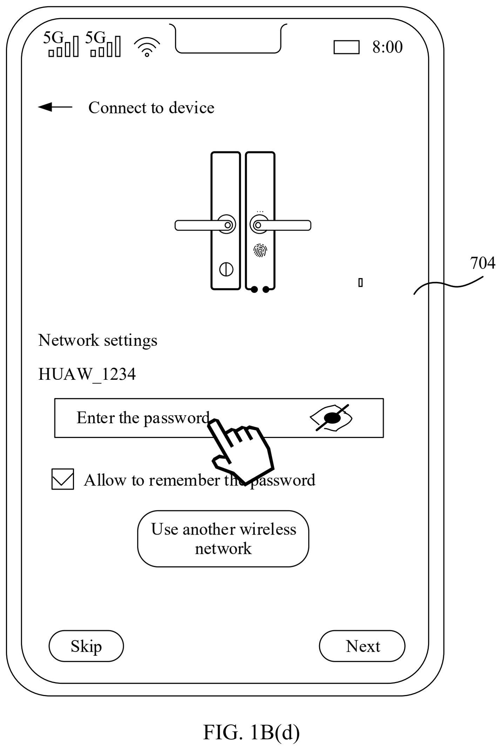

FIG. 1B(a) to FIG. 1B(d) show related interfaces of network configuration of the door lock. As shown in FIG. 1B(a), after detecting that a user taps a control 71 in an interface 701, the mobile phone may display a pop-up window 72, and the pop-up window 72 includes an option button "Add device". As shown in FIG. 1B(a), when detecting that the user taps the option button "Add device", the mobile phone may scan a surrounding addable device, and jump to an interface 702 shown in FIG. 1B(b). The interface 702 may include a scanned addable device, for example, an intelligent door lock. As shown in FIG. 1B(b), after detecting that the user taps a "Connect" button in the interface 702, the mobile phone may jump to an interface 703 shown in FIG. 1B(c). The user may configure the door lock based on a prompt in the interface 703, select an option "The operations have been completed", and tap a "Next" button. After detecting the foregoing operations of the user, the mobile phone may jump to an interface 704 shown in FIG. 1B(d). As shown in FIG. 1B(d), the user may enter a WLAN password in the interface 704 and tap a "Next" button. After detecting the operations of the user, the mobile phone requests to obtain the registration code of the door lock from the server.

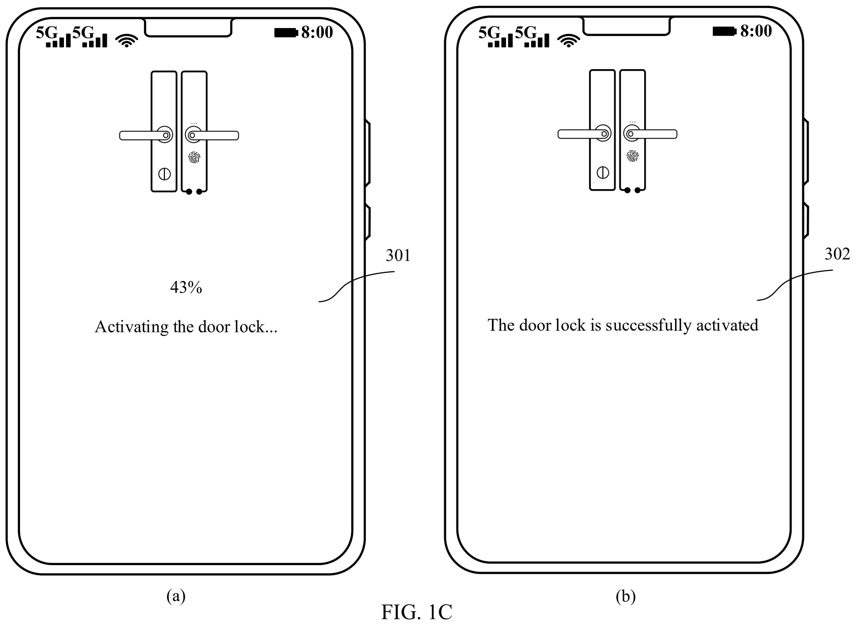

In some embodiments, after detecting that the user taps the "Next" button in the interface 704 in FIG. 1B(d), the mobile phone may display an interface 301 shown in (a) in FIG. 1C, to prompt that the door lock is being activated.

S3: The server returns the registration code of the door lock to the mobile phone.

S4: The mobile phone indicates the door lock to perform an activation procedure.

In a possible implementation, the mobile phone sends a notification message to the door lock, where the notification message carries the registration code.

S5: The door lock negotiates an encryption key with the server.

After obtaining the registration code from the mobile phone, the door lock negotiates the encryption key (PSK) with the server. Then, the door lock may encrypt, based on the encryption key, some information reported to the server, to improve communication security.

S6: The door lock sends, to the server, a request for activating the door lock.

S7: The server returns, to the door lock, an activation key (secret) and a device identifier (deviceID) that is allocated to the door lock.

In a possible implementation, after receiving, from the door lock, the request for activating the door lock, the server generates the activation key, allocates the device identifier to the door lock, encrypts the activation key and the device identifier of the door lock, and returns the encrypted activation key and the encrypted device identifier to the door lock. If the door lock obtains the activation key and the device identifier that is allocated by the server to the door lock, it means that the door lock is successfully activated. In this way, subsequently, the door lock may communicate with the server through a Wi-Fi network based on the device identifier allocated by the server to the door lock and the activation key, to obtain a corresponding service provided by the server.

In some embodiments, after the server returns the activation key to the door lock, the mobile phone may display an interface 302 shown in (b) in FIG. 1C, to prompt that the door lock is successfully activated.

S8: The door lock logs in to the server by using the activation key.

In a possible implementation, after the door lock obtains the activation key from the server, the activation key may be used as a security credential. When the door lock attempts to log in to the server by using the activation key, the server determines that the login of the door lock is valid, and allows the door lock to log in to the server, to obtain a service provided by the server.

S9: The server sends a token to the door lock.

After the door lock logs in to the server, the server may deliver the token to the door lock. Optionally, the token includes but is not limited to at least one of the following tokens: an access token (access token, AT) and a refresh token (refresh token, RT).

S10: The door lock interacts with the server by using the token.

After obtaining the token from the server, the door lock may communicate with the server by using the token. For example, the door lock logs in to the server once, obtains the activation key and the token, uses the token as the security credential, and interacts with the server by using the token. Then, the door lock is powered off and then powered on. In this case, the door lock may re-log in to the server by using the activation key, and obtain a new token from the server, to be used as a security credential for a subsequent communication procedure between the door lock and the server.

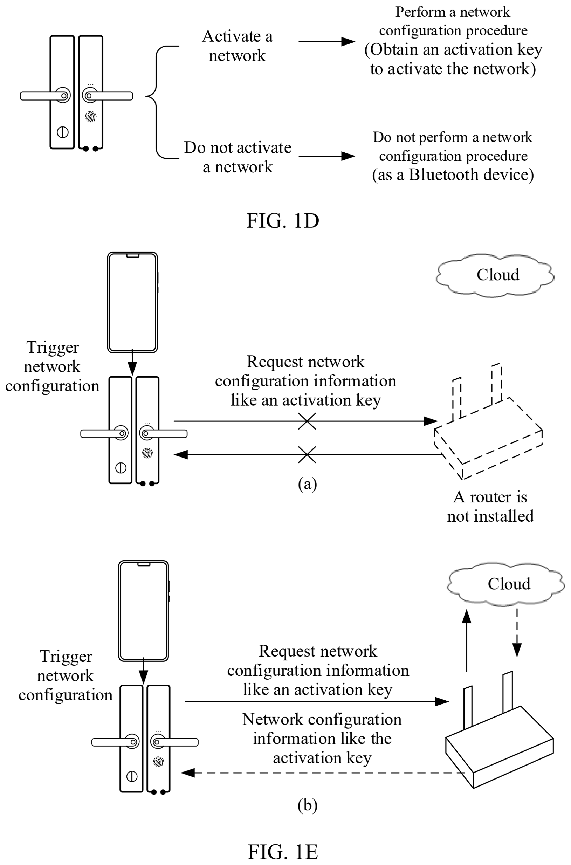

In the foregoing related technology, after scanning the door lock, the mobile phone may determine, based on an operation of the user, whether to use the door lock as a network connection device when the door lock is added. As shown in FIG. 1D, if it is determined that the door lock is used as the network connection device, the mobile phone indicates the door lock to perform a network connection activation procedure. If it is determined that the door lock does not need to be used as the network connection device, the door lock is subsequently used as a common Bluetooth device and is no longer used for network connection (for example, a Wi-Fi network).

In some cases, if the user enters the WLAN password in the interface 704, the mobile phone determines that the user wants to activate the door lock via the server. In this case, the mobile phone and the door lock perform the foregoing network configuration procedure. In the network configuration procedure, the door lock needs to be connected to the server via a router, and obtains, from the server, the activation key and the device identifier that is allocated by the server to the door lock, so that the door lock can be successfully activated. Subsequently, the door lock may interact with the server by using the activation key and the device identifier.

In some other cases, in FIG. 1B(d), if the user does not enter the WLAN password in the interface 704 and taps a "Skip" button, the mobile phone determines that the user does not want to activate the door lock added this time with the server. This may be understood as that the user does not want to use the door lock as a network connection device. In this case, the mobile phone and the door lock do not perform the foregoing network configuration procedure. The door lock may be added or registered as a common BLE device, and the door lock is no longer connected to a network subsequently.

When the door lock is registered as the common BLE device, if the user subsequently wants to connect the door lock to a network (for example, connect to a Wi-Fi network) for use, the mobile phone needs to perform the foregoing network configuration procedure again to activate the door lock, so that the door lock can be used as a network connection device. For example, the user deletes the added door lock in the operation interface, and performs operations in interfaces shown in FIG. 1B(a) to FIG. 1B(d), to trigger the mobile phone to activate the door lock.

It can be learned that, in a related technology, in a process of activating the door lock, the door lock needs to be actually connected to the router, to ensure that the door lock can obtain, from the server via the router, the activation key and the device identifier that is allocated by the server to the door lock, so as to successfully activate the door lock. However, because a network environment around the device is uncertain, when the device is activated, activation may fail because the device cannot be connected to the network, and the device cannot be used as a network connection device. For example, as shown in (a) in FIG. 1E, in a scenario in which there is a pre-installed door lock and no router at home. In this case, according to the foregoing network configuration procedure, the door lock cannot be activated because the door lock cannot obtain, from the server via the router, the activation key and the device identifier that is allocated by the server to the door lock, and the subsequent network connection of the door lock is affected. As shown in (b) in FIG. 1E, after a router is subsequently installed at home, the mobile phone and the door lock need to perform the foregoing network configuration procedure again, to obtain network configuration information required by the door lock. Network configuration is complex.

In addition, in a related technology, after the door lock is activated, the door lock may be used as a common BLE device or a network connection device, and can support only one channel. For example, if the mobile phone registers the door lock as a common BLE device, the door lock can communicate with another device only in a BLE manner. Subsequently, if the user wants to use the door lock as the network connection device, the user needs to trigger, by performing operations in interfaces shown in FIG. 1B(a) to FIG. 1B(d), the mobile phone to re-register and add the door lock used as the network connection device.

To resolve the foregoing technical problem, an embodiment of this application provides a device registration method. The device registration method in embodiments of this application may be applied to a wireless network system, and the wireless network system may be any type of wireless network system. For example, the wireless network may be a Wi-Fi network, a data network, or Bluetooth. A type of the wireless network system, a specific networking mode, and the like are not limited in embodiments of this application.

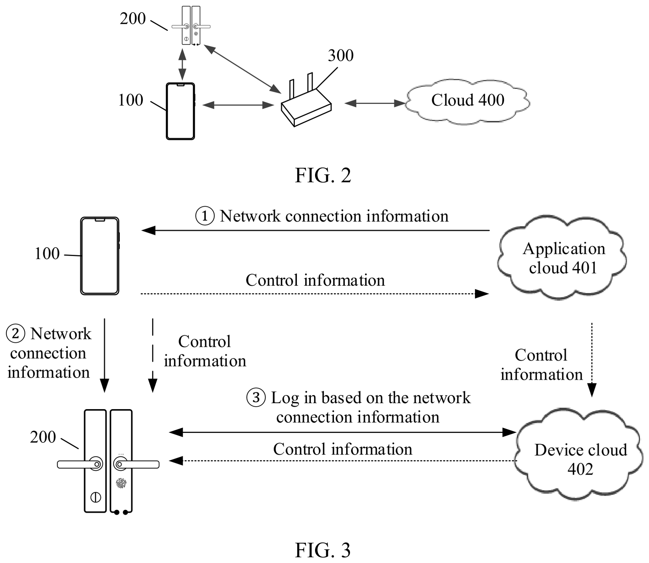

For example, the wireless network system is a Wi-Fi network system. FIG. 2 illustrates an architecture of the Wi-Fi network system to which embodiments of this application are applicable. As shown in FIG. 2, the system includes an access point 300, a device 100, and a device 200.

The device 100 may establish a connection to the access point 300, and may access a cloud 400 via the access point 300, to obtain a service provided by the cloud 400. The cloud 400 may also be referred to as a server 400. For example, the access point 300 may be a router or another access point that can connect the device 100 to the cloud 400. An implementation form of the access point is not limited in embodiments of this application.

In this embodiment of this application, the device 100 may act as a proxy of the device 200 to obtain, from the access point 300, network connection information required by the device 200, and send the network connection information to the device 200, to complete network configuration for the device 200. Subsequently, when the device 200 needs to connect to a network, the device 200 accesses the cloud 400 via the access point 300 based on the network connection information, to obtain the service provided by the cloud 400. In this way, even if the device 200 cannot access the cloud currently, it can be ensured that the device 200 obtains the required network connection information from the device 100 to complete network configuration, and subsequent network connection of the device 200 is not affected.

For example, the device 100 in embodiments of this application may be a mobile phone, a central control device of a whole house, a tablet computer, a personal computer (personal computer, PC), a personal digital assistant (personal digital assistant, PDA), a smartwatch, a netbook, a wearable device, an augmented reality (augmented reality, AR) device, a virtual reality (virtual reality, VR) device, a vehicle-mounted device, an intelligent vehicle, a robot, or the like. A specific form of the device 100 is not specifically limited in embodiments of this application.

In a possible implementation, a smart home application is installed on the device 100, and the device 100 may obtain the network connection information from the cloud 400 via the smart home application proxy device 200. For example, the smart home application is an AI Life application.

The device 200 may obtain, from the device 100, the network connection information (for example, an activation key and a device identifier that is allocated by the cloud 400 to the device 200) required for network configuration, to activate the device 200.

In embodiments of this application, the device 200 may be a multimode device, for example, a device that supports Wi-Fi and a BLE protocol, or a device that supports a data network protocol (for example, a 4G/5G protocol) and a BLE protocol. For example, the device 200 in embodiments of this application may be a smart home device like an intelligent door lock, a body fat scale, a floor sweeper, or a water dispenser. Alternatively, the device 200 may be a device like a mobile phone or a tablet. A specific form of the device 200 is not specifically limited in embodiments of this application. A form of the device 100 may be the same as or different from a form of the device 200.

The access point 300 may be a device that provides a network connection function. For example, in the Wi-Fi network, the access point 300 includes but is not limited to a wireless router (which may also be referred to as a gateway), a customer premise equipment (customer premise equipment, CPE), and the like. In another communication system, the access point 300 may be replaced with a device in a corresponding system. For example, in a 5G system, the access point 300 may be a device in a form of a base station or the like, and the device 100 may receive, from the cloud 400 via the base station, the network connection information required for network configuration, to complete network configuration.

In some embodiments, as shown in FIG. 3, the cloud 400 may include an application cloud 401 and a device cloud 402.

The application cloud 401 may provide interfaces such as device registration and proxy activation for an application (APP) in the device 100. The application on the device 100 may act as a proxy of the device 200 to register the device 200 with the application cloud 401, and activate the device 200, so that the device 200 may be used as a network connection device.

In a possible implementation, that the device 100 registers the device 200 with the application cloud 401 may be implemented as follows: The device 100 acts as a proxy of the device 200 to obtain the registration information (for example, the device identifier allocated by the cloud to the device 200) of the device 200 from the application cloud 401, and sends the registration information to the device 200.

In a possible implementation, that the device 100 activates the device 200 with the application cloud 401 may be implemented as follows: The device 100 acts as a proxy of the device 200 to obtain the activation information (for example, the activation key) of the device 200 from the application cloud 401, and sends the activation information to the device 200.

The device cloud 402 may provide interfaces such as a device connection interface and a status synchronization interface for the device 100 or the device 200. The device 100 or the device 200 may be connected to the device cloud 402. The device 200 may further synchronize a status of the device 200 with the device cloud 402. For example, the device 200 is a door lock. The door lock may synchronize an open state or a closed state of the door lock with the device cloud 402.

The following briefly describes the method in embodiments of this application with reference to the system architecture shown in FIG. 3. As shown in FIG. 3, the application proxy device 200 of the device 100 obtains the network connection information (for example, the activation key and the device identifier that is allocated by the cloud to the device 200) from the application cloud 401, and sends the network connection information to the device 200.

In some cases, after the device 200 obtains the network connection information from the device 100, if the device 200 needs to connect to the network, the device 200 may connect to the device cloud 402 based on the network connection information, to obtain a corresponding service provided by the device cloud 402. For example, the device 200 is a door lock, and the device 100 is a mobile phone. After the door lock is connected to the device cloud 402, if the mobile phone wants to control the door lock to be opened, as shown in FIG. 3, the mobile phone may send control information to the application cloud 401 via the smart home application, and the application cloud 401 sends the control information to the device cloud 402. Then, the device cloud 402 sends the control information to the connected door lock, to control the door lock to be opened.

For example, the mobile phone sends the control information to the application cloud 401 through a Wi-Fi connection. The application cloud 401 sends the control information to the device cloud 402 through a Wi-Fi connection. The device cloud 402 sends the control information to the door lock through a Wi-Fi connection.

The device cloud 402 may be further configured to synchronize information about the device 200 with the application cloud 401.

In some other cases, after the device 200 obtains the network connection information from the device 100, if the device 200 does not need to connect to the network, the device 200 may be used as a common BLE device. In this case, as shown in FIG. 3, the device 100 may send the control information to the device 200 through a communication connection (for example, a direct BLE connection) to the device 200.

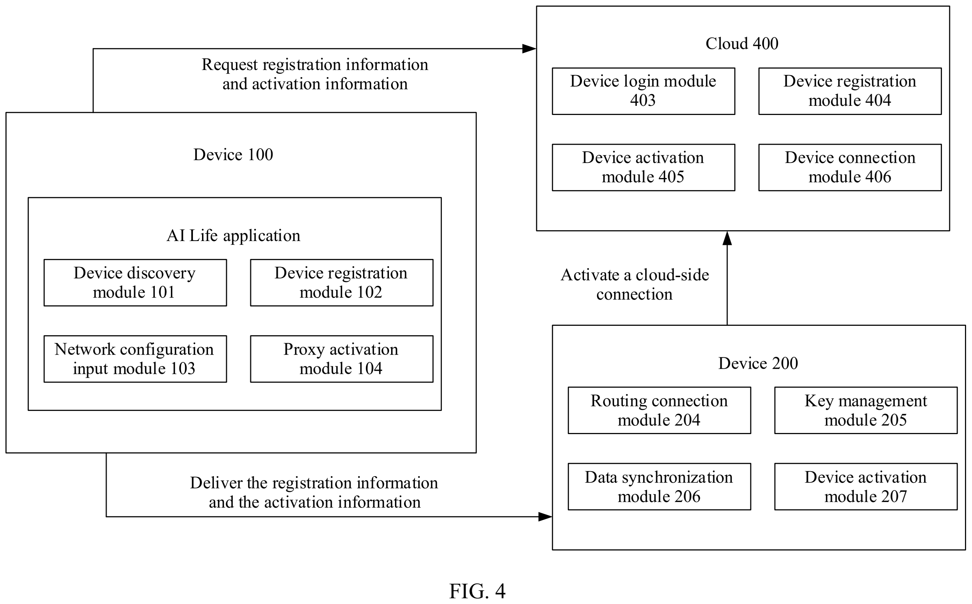

FIG. 4 illustrates a structure of each device in the system shown in FIG. 2. As shown in FIG. 4, for example, the smart home application installed on the device 100 is the AI Life application. The AI Life application may include a device discovery module 101, a device registration module 102, a network configuration input module 103, and a proxy activation module 104. The cloud 400 may include a device login module 403, a device registration module 404, a device activation module 405, and a device connection module 406. The device 200 may include a routing connection module 204, a key management module 205, a data synchronization module 206, and a device activation module 207.

The device discovery module 101 in the AI Life application may be configured to discover the device 100 and establish a communication connection (for example, a Bluetooth connection) to another device (for example, the device 200).

The network configuration input module 103 may be configured to: obtain device information (for example, a MAC address) of the device 200 from the device 200, and establish a connection to the cloud 400 based on the device information of the device 200.

The device registration module 102 may act as a proxy of the device 200 to register the device 200 with the cloud 400. For example, the device 100 acts as a proxy of the device 200 to obtain the registration information (for example, the device identifier allocated by the cloud to the device 200) of the device 200 from the cloud 400, and sends the registration information to the device 200. The device registration module 102 may be further configured to present the identifier of the successfully registered device 200 in an interface of the AI Life application.

The proxy activation module 104 may act as a proxy of the device 200 to activate the device 200 with the cloud 400, so that the device 200 may be used as a network connection device. For example, the device 100 acts as a proxy of the device 200 to obtain the activation information (for example, the activation key) of the device 200 from the cloud 400, and sends the activation information to the device 200.

The routing connection module 204 in the device 200 may be configured to establish a communication connection to the cloud 400 when the device 200 needs to be connected to a network.

The key management module 205 may be configured to manage the activation key obtained from the device 100.

The device activation module 207 may be configured to obtain a token from the cloud 400 based on the registration information and the activation information that are obtained from the device 100. Subsequently, the device 200 may use the token to communicate with the cloud 400. The token may be used as a security credential. When the device 200 attempts to access the cloud 400 by using the token, the cloud 400 determines that the device 200 is valid and allows the device 200 to access to obtain a service provided by the cloud 400.

The data synchronization module 206 may be configured to synchronize status information of the device 200 with the cloud 400. The device 200 is used as an example. The door lock may synchronize information about an open state or a closed state of the door lock with the cloud.

The device connection module 406 in the cloud 400 may be configured to establish a communication connection to another device (for example, the device 100).

The device registration module 404 may be configured to receive a registration request for the device 200 from the device 100, where the registration request may carry the device information of the device 200. The device registration module 404 may be further configured to generate a device identifier allocated to the device 200, and bind and associate real device information of the device 200 with the device identifier allocated to the device 200, for example, associate a real ID of the device 200 with an ID allocated by the cloud. The device registration module 404 may be further configured to return the registration information (for example, the device identifier allocated by the cloud to the device 200) of the device 200 to the device 100.

The device activation module 405 may be configured to send activation information to the device 100, and may be further configured to send a token to the device 200.

The device login module 403 may be configured to interact with the device 200, to provide a corresponding service for the device 200.

In embodiments of this application, a signal transmission direction between devices is not limited to the direction shown in the accompanying drawing.

FIG. 4 is an example diagram of a structure of each device. It should be understood that each device shown in the figure is merely an example, and in actual application, each device may have more or fewer components/modules than those shown in FIG. 4, or a combination of two or more components, or an arrangement of different components, or the like.

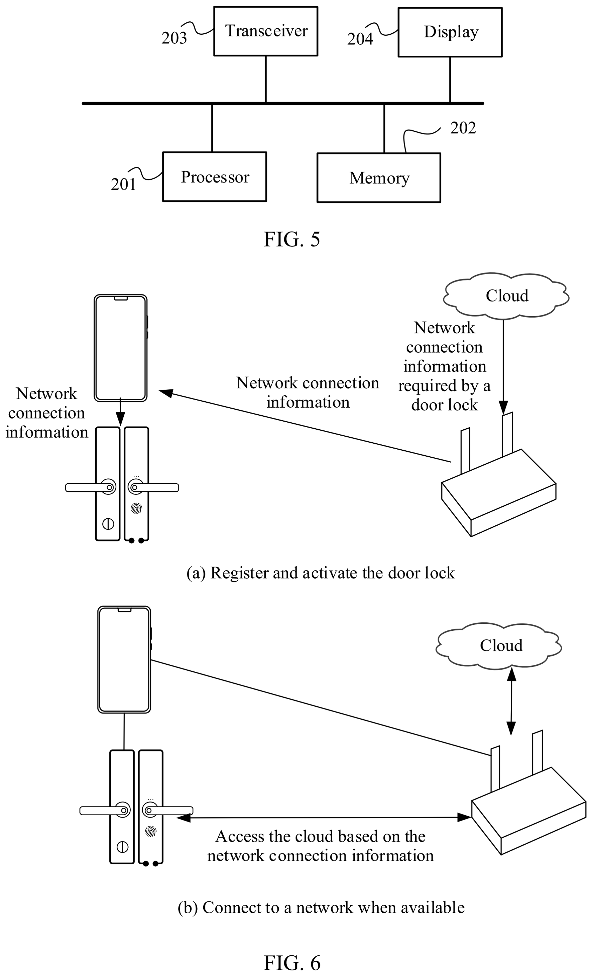

The device 100, the device 200, and the access point 300 in embodiments of this application may alternatively be implemented via a device in FIG. 5. FIG. 5 is a diagram of a hardware structure of a device according to an embodiment of this application. The device includes at least one processor 201, a memory 202, and at least one transceiver 203.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The foregoing components may include a communication line, configured to transmit information between the foregoing components.

The transceiver 203 is configured to communicate with another device. In embodiments of this application, the transceiver may be a module, a circuit, a bus, an interface, or another apparatus that can implement a communication function, and is configured to communicate with the another device. Optionally, the transceiver may be a transmitter that is independently disposed, and the transmitter may be configured to send information to the another device; or the transceiver may be a receiver that is independently disposed, and is configured to receive information from the another device. Alternatively, the transceiver may be a component that integrates functions of sending and receiving information. A specific implementation of the transceiver is not limited in embodiments of this application.

The memory 202 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Bluray disc, or the like), a magnetic disk storage medium, another magnetic storage device, or any other medium that can carry or store expected program code in a form of an instruction or a data structure and that can be accessed by a computer, but is not limited thereto. The memory may independently exist and may be connected to the processor through a communication line. The memory may alternatively be integrated with the processor.

The memory 202 is configured to store computer-executable instructions for implementing the solutions of this application, and the processor 201 controls the execution. The processor 201 is configured to execute the computer-executable instructions stored in the memory 202, to implement methods provided in the following embodiments of this application.

Optionally, the computer-executable instructions in embodiments of this application may also be referred to as application program code, instructions, computer programs, or another name. This is not specifically limited in embodiments of this application.

In a specific implementation, in an embodiment, the processor 201 may include one or more CPUs.

In a specific implementation, in an embodiment, the device may include a plurality of processors. Each of the processors may be a single-core (single-CPU) processor, or may be a multicore (multi-CPU) processor. The processor herein may be one or more devices, circuits, and/or processing cores configured to process data (for example, computer program instructions).

FIG. 5 is an example diagram of a structure of a device. It should be understood that the device shown in the figure is merely an example, and in actual application, the device may have more or fewer components than those shown in FIG. 5, or a combination of two or more components, or an arrangement of different components, or the like.

For example, as shown in FIG. 5, if the device is a device like a mobile phone, the device may further include a display 204, configured to implement a display function.

The technical solutions in embodiments of this application may be applied to a scenario of adding and registering a multimode device. The following describes the technical solutions in embodiments of this application in detail by scenario. In the following embodiment, an example in which the device 100 is a mobile phone, a dual-mode device 200 is a door lock that supports Wi-Fi and Bluetooth, and the access point is a router is used for unified description herein.

As shown in (a) in FIG. 6, in a network configuration process, the mobile phone may act as a proxy of the door lock to obtain, from a server, network connection information required by the door lock, and send the network connection information to the door lock. In this process, network configuration of the door lock can be completed without actually connecting the door lock to a network (for example, a Wi-Fi network). Subsequently, as shown in (b) in FIG. 6, when the door lock needs to connect to a network, the door lock accesses the network based on the network connection information, to obtain a service provided by the network.

The following provides specific technical details related to the foregoing method. First, in the following embodiments, an example in which the mobile phone acts as a proxy of the door lock to perform network configuration and registration with the server is mainly used. However, this does not constitute a limitation on a device type.

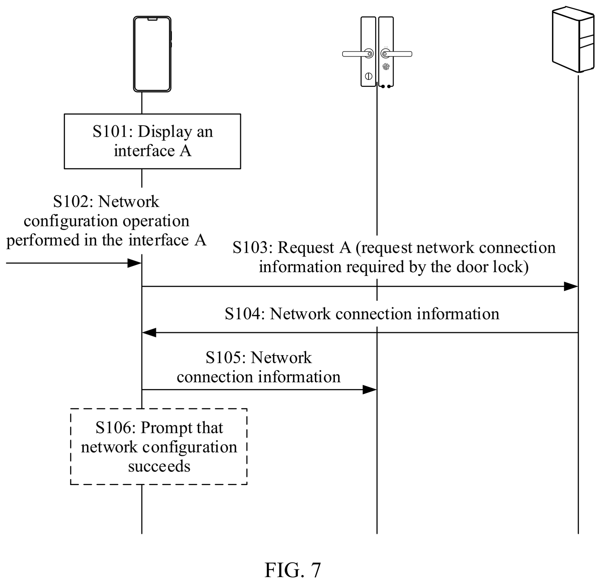

FIG. 7 illustrates a procedure of a device registration method. The method may include the following steps.

S101: A mobile phone displays an interface A.

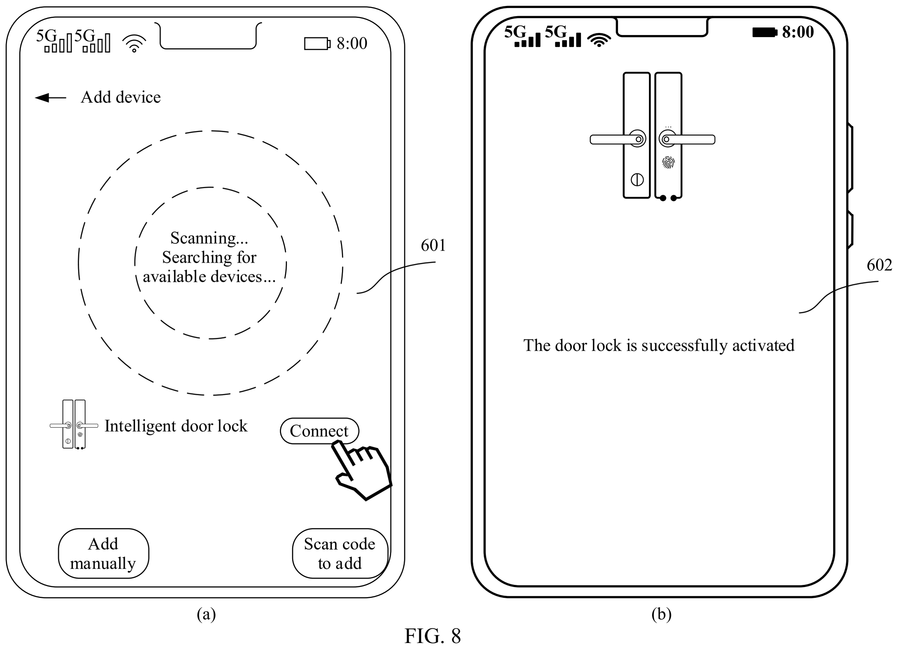

The interface A is an interface of the mobile phone in a network configuration process, and a user may perform network configuration on the door lock in the interface A. For example, the interface A is an interface 601 shown in (a) in FIG. 8.

Optionally, a corresponding application may be installed on the mobile phone, and an interface A of the application is displayed. For example, the interface A is an interface of an AI Life application.

S102: The mobile phone receives a network configuration operation performed in the interface A.

For example, as shown in (a) in FIG. 8, the user taps a "Connect" button in the interface 601, and the operation may be used as a network configuration operation.

Alternatively, the network configuration operation may be another operation. A type of the network configuration operation and an input manner of the network configuration operation are not limited in embodiments of this application. For example, as shown in FIG. 1B(d), after entering the WLAN password in the interface 704, the user may tap the "Next" button. The operation may be the network configuration operation that is used to trigger the mobile phone to obtain network connection information of the door lock from the server.

S103: The mobile phone sends a request A to a server in response to the network configuration operation, where the request A is used to request the network connection information required by the intelligent door lock.

Optionally, the request A may carry device information of the door lock, so that the server returns, to the mobile phone based on the device information of the door lock, the network connection information required by the door lock.

The device information of the door lock is related to an identity of the door lock. Optionally, the device information of the door lock includes but is not limited to at least one piece of the following information: a serial number (serial number, SN), a media access control (media access control, MAC) address, a model (productID, prodId), and whether Wi-Fi information is required for network connection. The serial number is used to verify a valid identity of the device.

The network connection information required by the door lock is information required by the door lock to access the server. Optionally, the network connection information includes but is not limited to at least one piece of the following information: registration information and activation information. Optionally, the registration information includes but is not limited to at least one piece of the following information: a device identifier (deviceId) allocated by the server to the door lock and an encryption key (psk). Optionally, the activation information includes but is not limited to at least one piece of the following information: an activation key (secret). The encryption key is used to encrypt information between the door lock and the server. The activation key is used as a security credential for communication between the door lock and the server. The door lock may use the activation key to request to access the server. After determining, based on the activation key used by the door lock, that the door lock is valid, the server may allow the door lock to access the server.

The foregoing example is still used. As shown in (a) in FIG. 8, after detecting that the user taps the "Connect" button (an example of the network configuration operation) in the interface 601 of the AI Life application, the mobile phone determines that the user wants to perform network configuration on the intelligent door lock. In this case, the AI Life application on the mobile phone acts as a proxy of the door lock to register and activate the door lock via the server through a communication connection between the mobile phone and the server, for example, sends the request A to the server, and receives, from the server, the network connection information required for network configuration of the door lock, to register and activate the door lock via the server.

In embodiments of this application, the communication connection may also be referred to as a communication channel (referred to as a channel for short) or a session, or may have another name.

Optionally, before S103, the mobile phone may establish a connection to the door lock, and perform a negotiation authentication procedure with the door lock according to a Bluetooth protocol, to negotiate a key. Optionally, the Bluetooth protocol includes but is not limited to any one of the following protocols: a BLE protocol and a classic Bluetooth protocol. Optionally, negotiation authentication includes but is not limited to speke authentication. After the key is negotiated, the mobile phone may query the device information (for example, a MAC address) of the door lock from the door lock.

Optionally, the mobile phone may further obtain information about an access point, and the information about the access point may also be considered as the network connection information. The information about the access point is used to indicate a second terminal to connect to the access point used for network connection. For example, in a Wi-Fi network, if the access point is a router, the information about the access point may include a service set identifier (service set identifier, SSID) of the router and a login password of the router (which may be referred to as a password of the router for short). In a data network, the information about the access point includes at least one piece of the following information: a key and a user identifier.

In a possible implementation, the mobile phone may display an interface, and the user enters the information about the access point in the interface (for example, the interface 704 shown in FIG. 1B(d)), or the mobile phone obtains the information about the access point from a hub device or another device.

S104: The server returns the network connection information to the mobile phone.

In this embodiment of this application, after receiving the request A from the mobile phone, the server returns, to the mobile phone, the network connection information required by the door lock.

S105: The mobile phone sends the network connection information to the door lock.

In a possible implementation, the mobile phone sends the network connection information to the door lock via the AI Life application.

For example, if a communication connection between the mobile phone and the door lock is a BLE connection, the mobile phone sends the network connection information to the door lock through the BLE connection (an example of a second connection mode). The mobile phone may alternatively send the network connection information according to another near field communication protocol (or referred to as a near field connection mode). This is not limited in embodiments of this application.

In a related technology, whether a device is used as a network connection device needs to be selected at the beginning of device registration, and the user needs to participate in the selection, which brings a great trouble to the user because the user does not know a specific selection and a corresponding selection result. However, in the technical solution in embodiments of this application, after obtaining the network connection information, the door lock connects to a network if the network can be connected, or the door lock waits for a next connection if the network cannot be connected, for example, the door lock waits for the connection until a network cable is connected to the router to restore a signal, or the door lock attempts to connect to the network after a SIM card is inserted into the device. In this process, the user does not need to perform complex operations, and the door lock may autonomously attempt to connect to a network when a network connection condition is met. This reduces operation complexity of the user. For example, when the technical solution in embodiments of this application is used, if the pre-installed door lock does not have a router, when registering the door lock, the user may choose to skip entering the Wi-Fi information.

S106: The mobile phone presents prompt information for prompting that network configuration succeeds.

In response to the network configuration operation performed by the user on the door lock (for example, tapping the "Connect" button in the interface 601 shown in (a) in FIG. 8), the mobile phone acts as a proxy of the door lock to obtain, from the server, the network connection information required by the door lock, and sends the network connection information to the door lock. In this way, network configuration is completed. In this way, after network configuration is completed, the door lock may subsequently access the server based on the network connection information.

Optionally, when the network configuration is completed, as shown in (b) in FIG. 8, the mobile phone may display "The door lock is successfully activated" in an interface 602, to prompt that the network configuration is completed. Alternatively, the mobile phone may prompt, in another manner, that network configuration is completed, for example, prompt, by using a voice, that network configuration is completed. A manner of prompting that network configuration is completed is not limited in embodiments of this application. In comparison with the network configuration interfaces in the related technology presented in FIG. 1C, in this embodiment of this application, after the door lock obtains the network connection information, the user can be prompted in time that the door lock is successfully activated.

Similarly, the mobile phone may further display the prompt information indicating that the registration succeeds after the registration ends.

According to the technical solution in embodiments of this application, the mobile phone may act as a proxy of the door lock to obtain, from the server, the network connection information required by the door lock, to complete network configuration for the door lock. In this way, when the mobile phone registers/adds a device like a door lock for the first time, the mobile phone can normally register and activate the device without strongly depending on a real network environment of the device. In other words, in a process of registering/adding the door lock, the door lock may or may not has network access, and normal registration and activation of the door lock are not affected. For example, when there is a pre-installed door lock at home, the door lock cannot access the server via the router because there is no router at home. In this case, it can be ensured that the door lock obtains the required network connection information from the mobile phone, to complete network configuration of the door lock. Subsequent use of the door lock is not affected, and user experience of a multi-mode device like the door lock is significantly improved. In addition, there is no need to wait for the door lock to connect to the router and the router to allocate an IP address to the door lock. This can shorten time and improve network configuration efficiency.

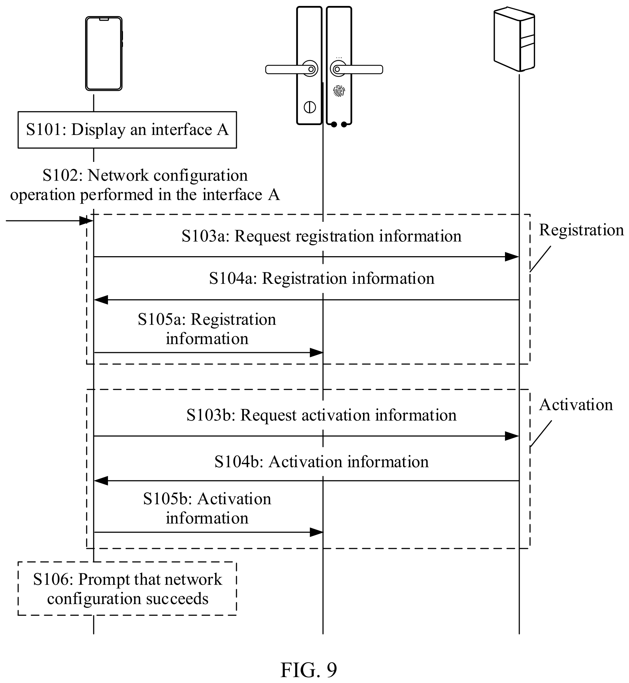

In some embodiments, as shown in FIG. 9, S103 may be further implemented as the following steps S103a and S103b.

S103a: The mobile phone requests registration information of the door lock from the server.

In a possible implementation, the mobile phone sends a request message to the server, where the request message is used to request to obtain the registration information of the door lock. After receiving the request message, the server completes registration of the door lock, and allocates a corresponding device identifier (an example of the registration information) to the door lock.

S103b: The mobile phone requests activation information of the door lock from the server.

In a possible implementation, the mobile phone sends a request message to the server by invoking a proxy activation interface provided by the server, where the request message is used to request to obtain the activation information of the door lock. After receiving the request message, the server learns that the door lock needs to be connected to the server now or in the future. Therefore, the server pre-allocates the activation information like an activation key secret to the door lock, so that the door lock is connected to the server for use.

It should be noted that a sequence of performing S103a and S103b is not limited in embodiments of this application. For example, the mobile phone may request to obtain the registration information and the activation information through one request message, or the mobile phone may separately request the registration information and the activation information through different request messages.

In some embodiments, as shown in FIG. 9, S104 may be further implemented as follows: S104a: The server returns the registration information of the door lock to the mobile phone. S104b: The server returns the activation information of the door lock to the mobile phone.

Optionally, considering that the activation information is related to communication security, the server may set a validity period of the activation information. When use duration of the activation information exceeds the validity period, the server updates the activation information, to improve communication security between the server and the mobile phone.

It should be noted that a sequence of performing S104a and S104b is not limited in embodiments of this application. For example, the server may return the registration information and the activation information to the mobile phone through one message, or the server may separately return the registration information and the activation information through different messages.

In step S104, the mobile phone acts as a proxy of the door lock to register the door lock with the server. After the door lock is successfully registered, the door lock can be used as a BLE device without affecting the use of the door lock as the BLE device.

In some embodiments, as shown in FIG. 9, S105 may be further implemented as follows: S105a: The mobile phone sends the registration information of the door lock to the door lock. S105b: The mobile phone sends the activation information of the door lock to the door lock.

Optionally, after receiving the registration information from the server, the mobile phone may return a response message for the registration information to the server.

Optionally, after receiving the activation information from the server, the mobile phone may return a response message for the activation information to the server.

It should be noted that a sequence of performing S105a and S105b is not limited in embodiments of this application. For example, the mobile phone may send the registration information and the activation information to the door lock through one message (for example, first network connection information). Alternatively, the mobile phone may separately send the registration information and the activation information through different messages. For example, the registration information is carried through the first network connection information, and the activation information is carried through second network connection information. In the foregoing step S105, the mobile phone acts as a proxy of the door lock to activate the door lock via the server. In this way, when the door lock has network access subsequently, the door lock may autonomously connect to the cloud.

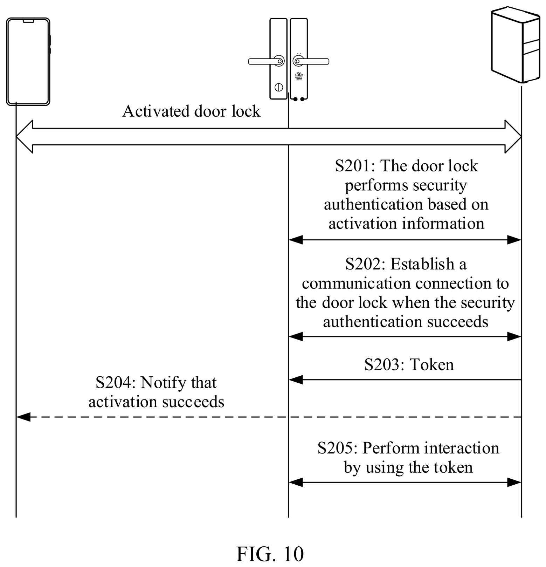

An embodiment of this application further provides a device registration method. After a door lock is registered and activated for the first time, in some cases, if the door lock is not connected to a network, the door lock may be used as a common BLE device. In some cases, if a network of the door lock meets a condition, the door lock may autonomously activate a network capability with a server based on activation information, to access the server, obtain a corresponding service provided by the server, and use the service as a network connection device. FIG. 10 illustrates a procedure of the method. The method includes the following steps.

S201: The door lock performs a security authentication procedure based on the activation information.

In a possible implementation, after the door lock obtains the activation information from a mobile phone, when the door lock can be connected to a network, the door lock may perform security authentication by using an activation key through a handshake procedure with the server. Security authentication includes but is not limited to exchange of a random number (random) and the activation key between the door lock and the server.

S202: When the security authentication succeeds, the server establishes a communication connection to the door lock.

In a possible implementation, that the security authentication succeeds means that the activation information used by the door lock is valid activation information allocated by the server to the door lock. In this case, the server determines that the door lock is a valid device, the server may establish a session (session) with the door lock, and network activation succeeds. Subsequently, the door lock may communicate with the server via the session.

S203: The server sends a token to the door lock.

The server may send, to the door lock through the communication connection to the door lock, the token used as a subsequent communication credential. Optionally, the token includes at least one of the following tokens: an AT and an RT.

S204: When the network is successfully activated, the server sends a door lock notification message to the mobile phone, where the notification message is used to notify that the network is successfully activated.

This step is an optional step. After the server establishes the communication connection to the door lock, the server may notify the mobile phone that the door lock has been connected to the server, and the network of the door lock is successfully activated. The mobile phone may display, in an interface based on the notification, status information indicating that the door lock is online.

S205: The door lock interacts with the server by using the token.

After the door lock receives the token from the server, the door lock subsequently interacts with the server by using the token. For example, the door lock accesses the server, and an access request carries the token. The server parses the token carried in the access request, and determines that the token is a valid token allocated by the server to the door lock. In this case, the server determines that the door lock is a valid device, allows access of the door lock, and returns an access result to the door lock.

For another example, the door lock synchronizes a status (for example, an open/closed state) of the door lock to the server by using the token. For example, the door lock sends a message to the server, where the message carries the status information of the door lock and the token. After parsing the message, the server determines, based on the token in the message, that the door lock is an authorized device, and may store the status information of the door lock.

According to the technical solution in embodiments of this application, the mobile phone may act as a proxy of the door lock to receive network connection information from the server through a communication connection between the mobile phone and the server, and to deliver the network connection information to the door lock. This process no longer depends on a network environment around the door lock. In other words, even if the door lock currently has no network access or cannot connect to a network, as long as the door lock can obtain the network connection information from the mobile phone, the door lock may subsequently connect to the server at any time based on the network connection information when the door lock has network access or can be connected to a network, to obtain a service provided by the server. In addition, the normal network connection of the door lock is not affected.

In addition, in some cases, if the door lock can be connected to the server, but network quality is poor, the door lock needs to take a long time to obtain network connection information from the server by using a related technology, resulting in low network configuration efficiency. According to the technical solution in embodiments of this application, the mobile phone acts as a proxy of the door lock to obtain, from the server, the network connection information required by the door lock, and the door lock does not need to be connected to the server. In other words, even if network quality between the door lock and the server is poor, efficiency of obtaining the network connection information by the mobile phone from the server is not affected, and efficiency of a network configuration procedure can be improved as much as possible.

In addition, in a related technology, when the door lock is not connected to a network and is registered as a common BLE device, if the user subsequently wants to connect the door lock to a network for use, the user needs to perform operations in many interfaces such as those shown in FIG. 1B(a) to FIG. 1B(d), to trigger the mobile phone to re-perform an entire network configuration procedure. In the technical solution in embodiments of this application, after the door lock has a network environment or a network is normal, the door lock may autonomously connect to Wi-Fi based on the network connection information obtained from the mobile phone without an additional operation of the user. In addition, after the door lock has a network environment, the door lock does not need to perform an entire network configuration procedure, for example, does not need to re-obtain the network connection information. This simplifies a network connection procedure, and shortens time required for network connection of the door lock. Therefore, network connection efficiency of the door lock can be improved.

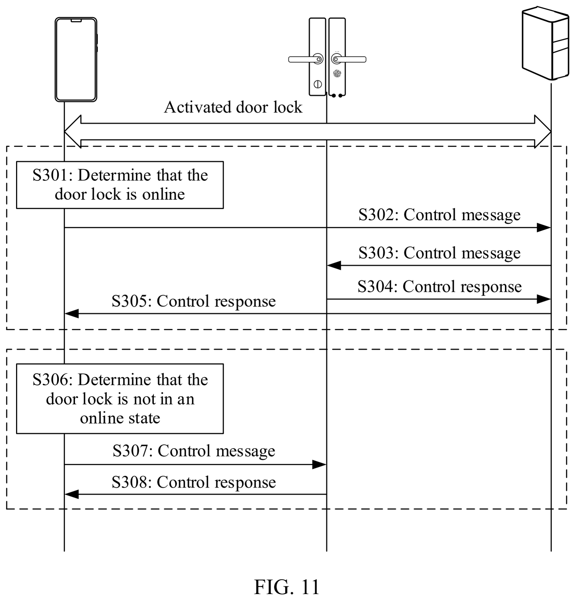

An embodiment of this application further provides a device registration method. When a network status of a door lock changes, the door lock may autonomously switch a channel used for information transmission, to meet an information transmission requirement. For example, the first connection mode is switched to the second connection mode to be connected to the second terminal, or the second connection mode is switched to the first connection mode to be connected to the second terminal. FIG. 11 illustrates a procedure of the method. The method may include the following steps.

S301: A mobile phone determines that the door lock is online.

That the door lock is online may be understood as that the network status of the door lock meets a first condition. The first condition includes at least one of the following conditions: The door lock can be connected to a server, and network quality between the door lock and the server is higher than a threshold.

After the mobile phone acts as a proxy of the door lock to register and activate the door lock via the server, a default protocol type of the door lock is Bluetooth, which may be understood as that the door lock is registered as a Bluetooth device by default.

In a possible implementation, after establishing a communication connection to the door lock, the server may notify the mobile phone that the door lock is connected to the network. In this case, the mobile phone may update the protocol type of the door lock to a Wi-Fi network (Network), which may be understood as updating a registration type of the door lock to a network connection device. Optionally, the mobile phone may display an online (which may be denoted as network&&online) state of the door lock in an interface.

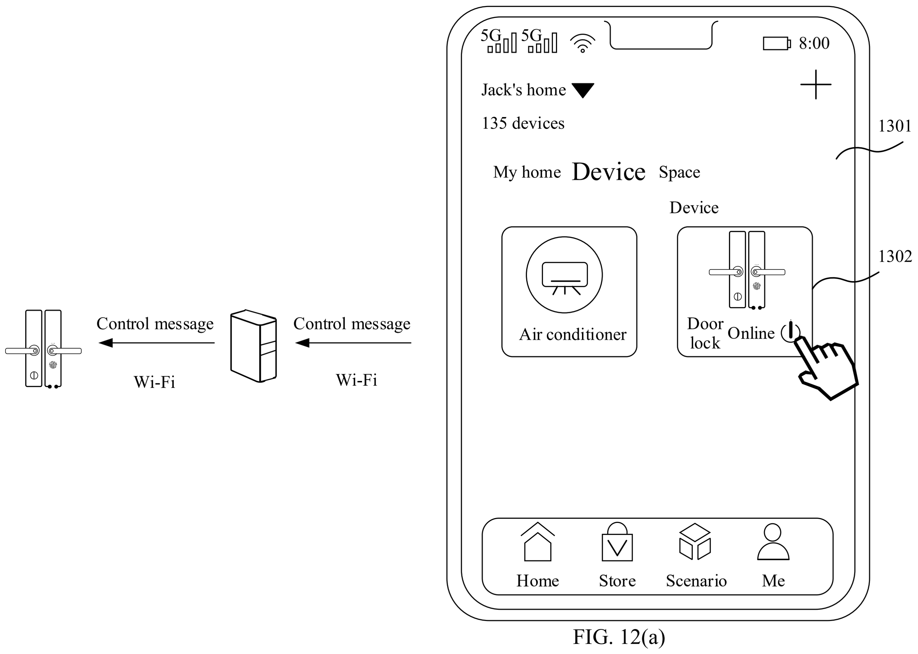

As shown in FIG. 12(a), the mobile phone displays, in an interface 1301, a control card 1302 corresponding to the door lock. The network status of the door lock presented in the card 1302 is online.

S302: The mobile phone sends a control message for the door lock to the server.

That the door lock is online means that there is a communication connection between the door lock and the server. In this case, the mobile phone may deliver the control message to the door lock via the server. In a possible implementation, the mobile phone sends the control message for the door lock to the server, and the server forwards the control message to the door lock.

Optionally, the mobile phone sends the control message to a router based on information about an access point (for example, an SSID and a password of the router) through the communication connection to the router, and then the router sends the control message to the server.

For example, the mobile phone delivers, to the door lock via the server, a control message used to control the door lock to be opened.

S303: The server sends the control message to the door lock.

Correspondingly, the door lock receives the control message, and performs a corresponding operation based on the control message, for example, opening the door lock.

S304: The door lock sends a control response for the control message to the server.

Optionally, the control response includes activation information and registration information. After receiving the control response from the mobile phone, the server parses the control response to obtain the authorized activation information allocated by the server to the door lock. In this case, the server determines that the door lock is an authorized device, and the server may trust the control response from the door lock.

For example, the door lock returns a control response to the server, to indicate that the door lock is opened.

S305: The server returns the control response to the mobile phone.

S306: The mobile phone determines that the door lock is not in an online state (a non-online state).

Optionally, the non-online state may also be referred to as an offline state.

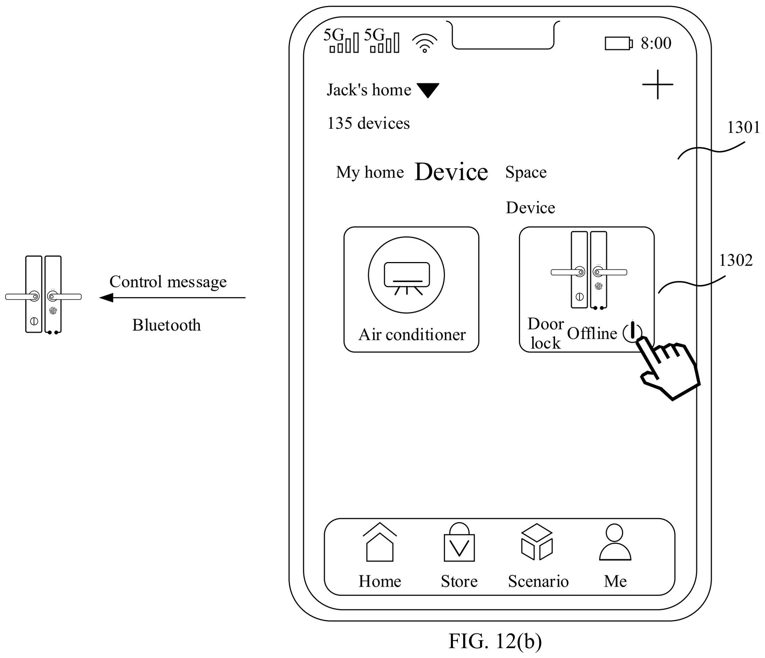

The offline (offline) state may be understood as that the network status of the door lock does not meet the first condition. For example, the offline state may mean that the door lock has been connected to the server, but a current communication connection between the door lock and the server has failed. That the communication connection between the door lock and the server fails may mean that the communication connection exists, but the communication connection is unavailable. Alternatively, it may mean that the communication connection is disconnected. For example, initially, the door lock is online, the router or an operator is faulty, and the server detects that the door lock is offline. In this case, the server may notify the mobile phone that the door lock is offline. Optionally, the mobile phone may display an offline (which may be denoted as network&&offline) state of the door lock in an interface. As shown in FIG. 12(b), the mobile phone presents, in the control card 1302 corresponding to the door lock in the interface 1301, that the network status of the door lock is offline.

Alternatively, the offline state may mean that the door lock has never been connected to the server and is used as a common BLE device. In this case, after establishing a Bluetooth connection to the door lock, the mobile phone may display the network status of the door lock in the interface.

S307: The mobile phone sends a control message to the door lock.

That the door lock is offline means that the communication connection between the door lock and the server is unavailable. In this case, the mobile phone may deliver a control message to the door lock through a communication connection (for example, a direct Bluetooth connection) to the door lock.

S308: The door lock returns a control response to the mobile phone.

For example, the door lock returns the control response for the control message to the mobile phone through the Bluetooth connection to the mobile phone.

In this embodiment of this application, if the door lock can be connected to a network or is online, the mobile phone may send the control message to the door lock through a network channel (for example, a Wi-Fi network). If the door lock cannot be connected to a network or is offline, the mobile phone may send the control message through a channel (for example, a directly connected Bluetooth channel) between the mobile phone and the door lock. It can be learned that, in a related technology, if a communication manner of the door lock needs to be switched, the mobile phone needs to re-register and add the door lock, and a procedure is complex. In embodiments of this application, the mobile phone may autonomously switch a channel between the mobile phone and the door lock based on a network status of the door lock, and the door lock does not need to be re-registered or added. The procedure is simple, switching efficiency is high, and information can be transmitted between the mobile phone and the door lock in time through a new communication channel, to meet a communication requirement.

The foregoing mainly uses an example in which the mobile phone sends the control message to the door lock for description. In some other embodiments, the message between the mobile phone and the door lock may alternatively be of another type, for example, a status synchronization message. This is not limited in embodiments of this application. The mobile phone may intelligently switch a transmission channel between the mobile phone and the door lock based on the network status of the door lock. Similarly, the door lock may also intelligently switch a transmission channel between the door lock and the mobile phone based on the network status of the door lock. During implementation of this process, a registration procedure does not need to be re-executed for the door lock.

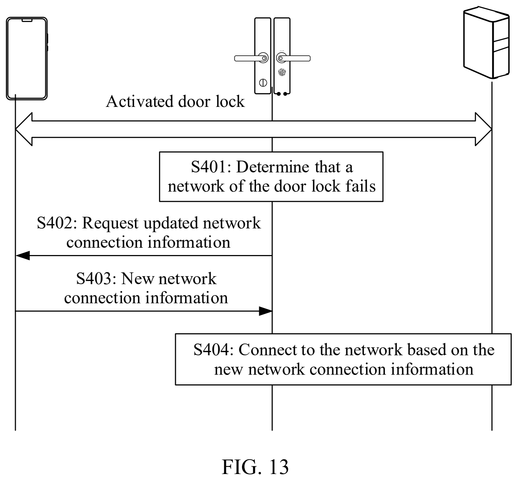

An embodiment of this application further provides a device registration method. After access point information required by a door lock changes, updated access point information may be obtained from a mobile phone, and network connection is performed based on the new access point information. FIG. 13 illustrates a procedure of the method. The method may include the following steps.

S401: A door lock determines that a network of the door lock fails.

That the network of the door lock fails may mean that the network of the door lock is disconnected, or the network of the door lock is unavailable although the door lock is connected to the network. For example, when a location of the door lock changes, or an SSID or a password of a router changes, the door lock cannot connect to the network, and the network of the door lock may fail.

S402: The door lock requests the updated access point information from the mobile phone.

In a possible implementation, if the door lock cannot connect to a network (for example, a Wi-Fi network) within a specific time period, the door lock may initiate a request message (an example of a first message), to request to obtain the updated access point information.

Optionally, the request message may be Bluetooth broadcast or multicast. The Bluetooth broadcast is used as an example. The Bluetooth broadcast carries an identifier of the door lock.

S403: The mobile phone sends the new access point information to the door lock.

For example, the access point information is the SSID and the password of the router. In a possible implementation, after receiving, from the door lock, the request message used to obtain the access point information, the mobile phone automatically displays a corresponding setting interface, and the user may enter or select the updated access point information in the interface. After receiving the access point information entered by the user, the mobile phone may send the updated access point information to the door lock through a communication connection (for example, a Bluetooth connection) to the door lock, so that the door lock performs network connection based on the latest access point information.

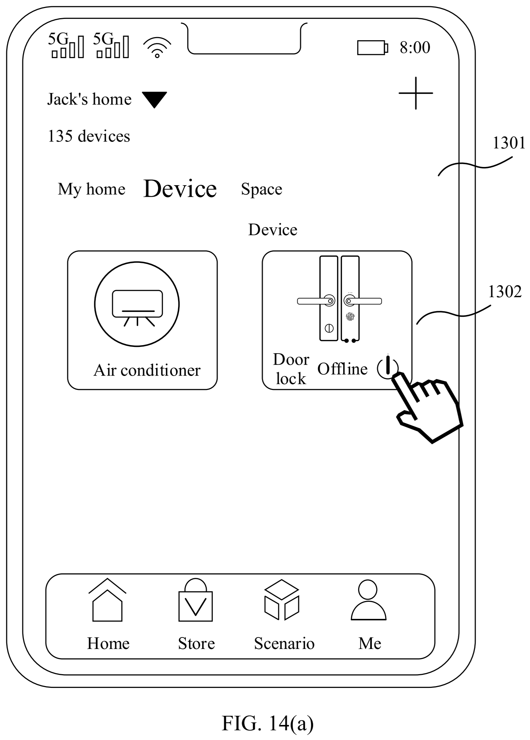

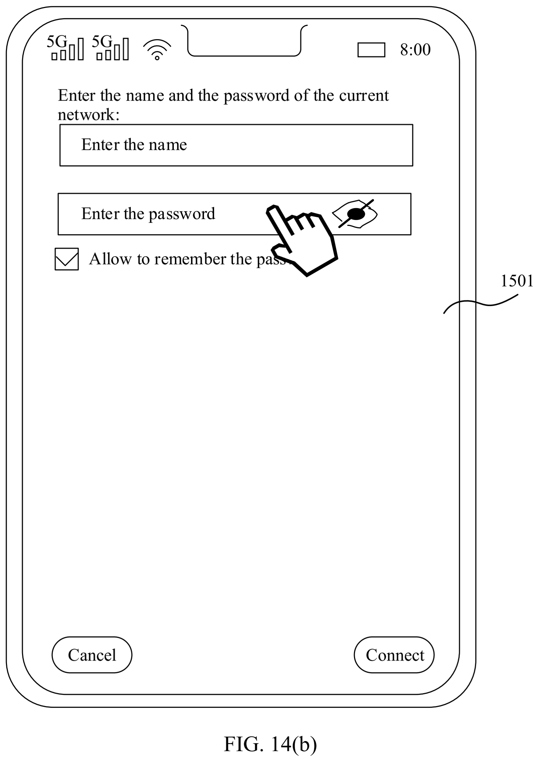

As shown in FIG. 14(a), the password of the router changes. As a result, the door lock cannot connect to the network, and the mobile phone shows that the door lock is in an offline state. After the door lock is disconnected from the network, the door lock may send a Bluetooth broadcast to request to obtain an updated SSID and password of the router. After receiving the Bluetooth broadcast, the mobile phone displays an interface 1501 (an example of a first interface) shown in FIG. 14(b). The user may enter the latest network name (that is, an SSID of the router) and the latest password in the interface 1501. After receiving the network name and the password that are entered by the user, the mobile phone sends the network name and the password to the door lock.

In some cases, if the mobile phone is close to the door lock and can receive the Bluetooth broadcast from the door lock, the mobile phone may automatically display the setting interface after receiving the Bluetooth broadcast, so that the user enters the SSID and the password of the router, and sends the SSID and the password of the router that are entered by the user to the door lock.

In some other cases, if the mobile phone is far away from the door lock, a device that receives the Bluetooth broadcast from the door lock may forward the Bluetooth broadcast, so that the mobile phone can receive the Bluetooth broadcast forwarded by the device. After receiving the Bluetooth broadcast, the mobile phone may automatically display the setting interface, so that the user enters the SSID and the password of the router, and sends the SSID and the password that are of the router and that are entered by the user to the door lock.

In some other cases, when the door lock cannot connect to the network, prompt information may be displayed. For example, an LED light on the door lock blinks, to prompt the user that the network of the door lock has failed. The user may move the mobile phone close to the door lock or perform one-tap with the door lock, so that the mobile phone scans the Bluetooth broadcast of the door lock, and automatically displays the foregoing setting interface, so that the user enters the SSID and the password of the router.

In another possible implementation, the mobile phone obtains the updated access point information from a smart home hub device (or another device), and sends the access point information to the door lock.

Optionally, the mobile phone sends the updated access point information to the door lock through the communication connection (for example, a Bluetooth connection) to the door lock.

S404: The door lock connects to a network based on the new access point information.

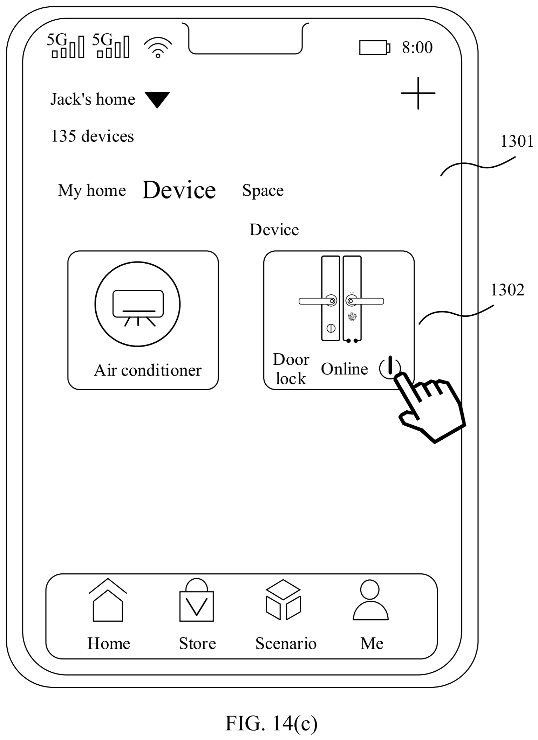

For example, after the door lock is connected to the network based on the network name and the password that are entered by the user and that are shown in FIG. 14(b), the mobile phone may display the interface 1301 shown in FIG. 14(c), and an online state of the door lock is presented in the card 1302 corresponding to the door lock.

In the related technology, after the access point information changes, the door lock needs to be re-registered to update the access point information. In embodiments of this application, after the access point information changes, the door lock may request updated access point information from the mobile phone, and receive the updated access point information from the mobile phone. In this way, the access point information does not need to be updated by re-registering the door lock, and the access point information required for network connection of the door lock can be quickly updated. This improves network connection efficiency of the door lock.

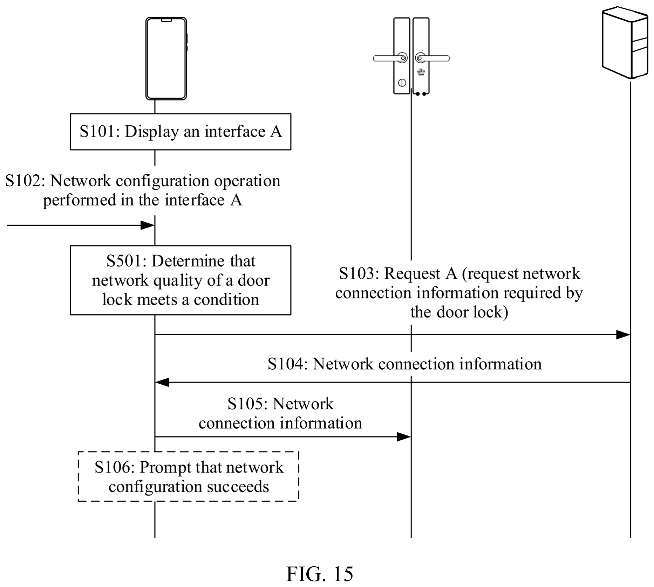

An embodiment of this application further provides a device registration method, to detect network quality of a door lock. When it is determined that the network quality of the door lock is poor, a mobile phone acts as a proxy of the door lock to perform registration and activation, to improve registration efficiency. As shown in FIG. 15, after receiving a network configuration operation in S102, the mobile phone may perform S501.

S501: The mobile phone determines that the network quality of the door lock meets a condition.

That the network quality of the door lock meets the condition may mean that the network quality of the door lock is lower than a threshold, or the network quality of the door lock is lower than network quality of the mobile phone. In this case, the mobile phone may perform S103 and S104 to act as a proxy of the door lock to obtain, from a server, network connection information required by the door lock.

In some other cases, if the network quality of the door lock is higher than the threshold, or the network quality of the door lock is higher than the network quality of the mobile phone, the door lock may obtain the network connection information from the server.

In this way, the network connection information is obtained from the server via the mobile phone or the door lock with good network quality, so that efficiency of obtaining the network connection information can be improved. This improves efficiency of an entire network configuration procedure.

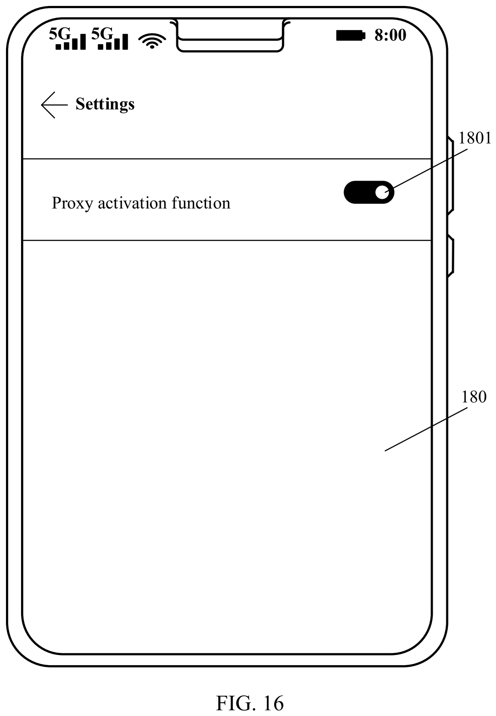

In some embodiments, a proxy activation function may be enabled via the mobile phone. For example, as shown in FIG. 16, a setting interface 180 (an example of a second interface) of the mobile phone may include a switch 1801 (an example of a first control). If the switch 1801 is enabled, the mobile phone may perform the method in this embodiment of this application, so that the mobile phone acts as a proxy of the door lock to quickly obtain the network connection information, to implement network configuration of the door lock.

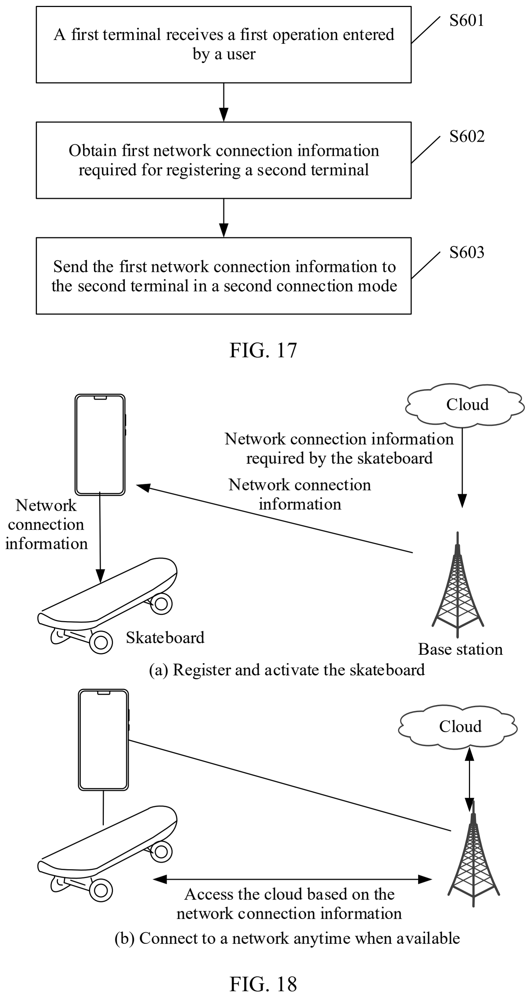

In FIG. 18, an example in which a proxy registration function and a proxy activation function are integrated is used. In some other embodiments, different switches may be further set to respectively enable the proxy registration function and the proxy activation function.

The foregoing mainly uses an example in which a multimode device is a door lock that supports BLE and Wi-Fi. In some other embodiments, the multimode device may alternatively be a device that supports a plurality of other connection modes, for example, a device that supports a data network and a near-field connection mode BLE, or a device that supports a data network and NFC.

FIG. 17 illustrates still another procedure of a method according to an embodiment of this application. The method includes the following steps.

S601: A first terminal receives a first operation entered by a user.

The first operation is used to register a second terminal, and the second terminal is a terminal that supports a first connection mode and a second connection mode.

For example, the first terminal is a mobile phone, and the second terminal is a skateboard. The mobile phone displays a registration interface, and displays an identifier of the skateboard in the registration interface. The user taps the identifier of the skateboard to trigger the following skateboard registration procedure. The first connection mode supported by the skateboard is the BLE, and the second connection mode is a data network connection mode.

S602: The first terminal obtains first network connection information required for registering the second terminal, where the first network connection information is used to indicate the second terminal to connect to a network in the first connection mode.

For example, as shown in (a) in FIG. 18, the mobile phone acts as a proxy of the skateboard, and obtains, from a server, network connection information required for registering the skateboard. The network connection information is used to indicate that the skateboard is connected to the network in the data network connection mode.

S603: The first terminal sends the first network connection information to the second terminal in the second connection mode.

For example, still as shown in (a) in FIG. 18, after obtaining, from the server, the network connection information required for registering the skateboard, the mobile phone acts as a proxy of the skateboard to send the network connection information to the skateboard in the BLE connection mode.

In this example, the mobile phone acts as a proxy of the skateboard to obtain the network connection information required by the skateboard from the server. Therefore, even if the skateboard cannot be connected to the network currently, it can be ensured that the skateboard obtains the required network connection information from the mobile phone, to complete network configuration of the skateboard. Subsequently, after a SIM card is inserted into the skateboard or a tariff is restored, as shown in (b) in FIG. 18, the skateboard may autonomously connect to the network based on the network connection information without the need to be re-registered and activated. It can be learned that, for an outdoor scenario, for example, a scenario in which the skateboard initially has no SIM card, or a scenario in which a data service is disabled due to a tariff problem after the SIM card is activated, a registration procedure can be simplified by using the technical solution in embodiments of this application.

It should be noted that the foregoing plurality of embodiments may be combined, and a combined solution is implemented. Optionally, some operations in processes of the foregoing method embodiments are randomly combined, and/or a sequence of some operations is randomly changed. In addition, a sequence between steps of each process is merely an example, and does not constitute a limitation on a sequence between the steps. The steps may alternatively be performed in another sequence. It is not intended to indicate that the execution order is the only order in which these operations can be performed. A person of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments. Alternatively, execution bodies (for example, a functional module) of some steps in the method embodiments may be replaced with other execution bodies.

In addition, the method embodiments may be implemented separately or in combination.

Some other embodiments of this application provide an apparatus. The apparatus may be the first terminal, the second terminal, the server, or the like. The apparatus may include a display, a memory, and one or more processors. The display and the memory are coupled to the processor. The memory is configured to store computer program code, and the computer program code includes computer instructions. When the processor executes the computer instructions, the apparatus may perform functions or steps performed by the corresponding apparatus in the foregoing method embodiments. For a structure of the apparatus, refer to the device (apparatus) shown in FIG. 5.

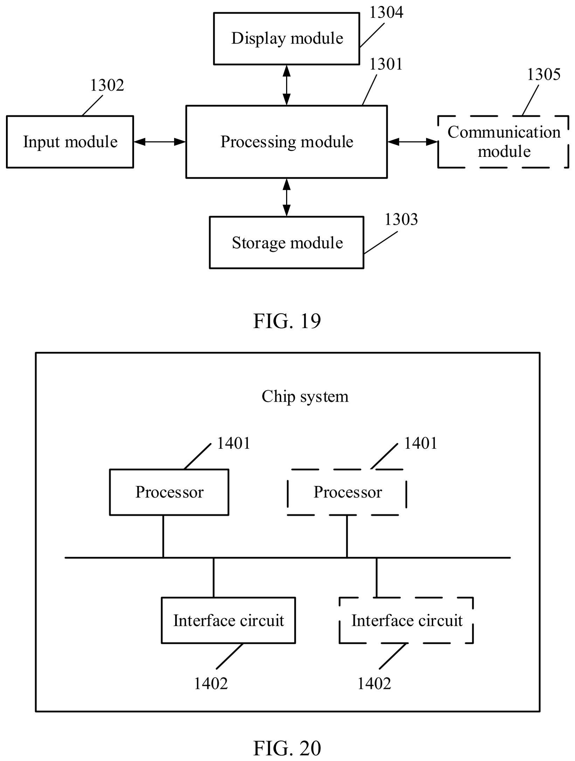

A core structure of the apparatus may be represented as a structure shown in FIG. 19. The apparatus includes a processing module 1301, an input module 1302, a storage module 1303, and a display module 1304.

The processing module 1301 may include at least one of a central processing unit (CPU), an application processor (Application Processor, AP), or a communication processor (Communication Processor, CP). The processing module 1301 may perform an operation or data processing related to control and/or communication of at least one of other elements of user equipment. Specifically, the processing module 1301 may be configured to control, based on a specific trigger condition, content displayed on a primary screen. The processing module 1301 is further configured to process input instructions or data, and determine a display style based on processed data.

The input module 1302 is configured to: obtain instructions or data input by a user, and transmit the obtained instructions or data to another module of the device. Specifically, an input mode of the input module 1302 may include touch, a gesture, proximity to a screen, or the like, or may be a voice input. For example, the input module may be a screen of the device, and may obtain an input operation of the user, generate an input signal based on the obtained input operation, and transmit the input signal to the processing module 1301.

The storage module 1303 may include a volatile memory and/or a non-volatile memory. The storage module is configured to store instructions or data related to at least one of other modules of an apparatus device of the user. Specifically, the storage module may record a location of an interface in which an apparatus interface element UI is located.

The display module 1304 may include, for example, a liquid crystal display (LCD), a light emitting diode (LED) display, an organic light-emitting diode (OLED) display, a microelectro-mechanical system (MEMS) display, or an electronic paper display. The display module is configured to display content (for example, text, an image, a video, an icon, or a symbol) that can be viewed by the user.

Optionally, the apparatus further includes a communication module 1305, configured to support a personal apparatus in communicating with another personal apparatus (through a communication network). For example, the communication module may be connected to a network through wireless communication or wired communication, to communicate with another personal apparatus or a network server. The wireless communication may use at least one of cellular communication protocols, for example, long term evolution (LTE), long term evolution advanced (LTE-A), code division multiple access (CDMA), wideband code division multiple access (WCDMA), universal mobile telecommunications system (UMTS), wireless broadband (WiBro), or a global system for mobile communication (GSM). The wireless communication may include, for example, short-range communication. The short-range communication may include at least one of wireless fidelity (Wi-Fi), Bluetooth, near field communication (NFC), magnetic stripe transmission (MST), or GNSS.

It should be noted that each functional module of the apparatus may perform one or more steps in the foregoing method embodiments.

An embodiment of this application further provides a chip system. As shown in FIG. 20, the chip system includes at least one processor 1401 and at least one interface circuit 1402. The processor 1401 and the interface circuit 1402 may be interconnected through a line. For example, the interface circuit 1402 may be configured to receive a signal from another apparatus (for example, a memory of the device). For another example, the interface circuit 1402 may be configured to send a signal to another apparatus (for example, the processor 1401). For example, the interface circuit 1402 may read instructions stored in the memory, and send the instructions to the processor 1401. When the instructions are executed by the processor 1401, the device is enabled to perform the steps in the foregoing embodiments. Certainly, the chip system may further include another discrete component. This is not specifically limited in embodiments of this application.

An embodiment of this application further provides a computer storage medium. The computer storage medium includes computer instructions. When the computer instructions are run on the foregoing device, the device is enabled to perform functions or steps performed by the mobile phone in the foregoing method embodiments.

An embodiment of this application further provides a computer program product. When the computer program product runs on a computer, the computer is enabled to perform the functions or the steps performed by the mobile phone in the foregoing method embodiments.

The foregoing descriptions about implementations allow a person skilled in the art to clearly understand that, for the purpose of convenient and brief description, division of the foregoing functional modules is used as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division, and may be other division in an actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or the communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A device registration method, applied to a first terminal, wherein the method comprises:
receiving a first operation entered by a user, wherein the first operation is used to register a second terminal, and the second terminal is a terminal that supports a first connection mode and a second connection mode;
obtaining first network connection information required for registering the second terminal, wherein the first network connection information is used to indicate the second terminal to connect to a network in the first connection mode; and
sending the first network connection information to the second terminal in the second connection mode.

2. The method according to claim 1, wherein the first network connection information comprises activation information used to activate the second terminal; or
after sending the first network connection information to the second terminal in the second connection mode, the method further comprises:
obtaining, from a server, second network connection information required for activating the second terminal; and
sending the second network connection information to the second terminal in the second connection mode.

3. The method according to claim 1 or 2, further comprising:
presenting prompt information, wherein the prompt information is used to prompt that the second terminal has been registered and/or activated.

4. The method according to claim 2, wherein the first network connection information further comprises information about an access point, or the second network connection information further comprises the information about the access point; and
the information about the access point is used to indicate the second terminal to connect to the access point used for network connection.

5. The method according to claim 4, wherein in a wireless fidelity Wi-Fi network, the information about the access point comprises at least one piece of the following information: a service set identifier SSID of the access point and a password of the access point; and in a data network, the information about the access point comprises at least one piece of the following information: a key and a user identifier.

6. The method according to claim 4 or 5, wherein after sending the first network connection information to the second terminal in the second connection mode, the method further comprises:
receiving a first message from the second terminal, wherein the first message is used to request information about an updated access point; and
sending the information about the updated access point to the second terminal.

7. The method according to claim 6, wherein after receiving the first message from the second terminal, the method further comprises:
presenting a first interface; and
receiving the information about the access point entered by the user in the first interface; and
sending the information about the updated access point to the second terminal comprises: sending the information about the access point entered by the user to the second terminal.

8. The method according to any one of claims 1 to 7, wherein after sending the first network connection information to the second terminal in the second connection mode, the method further comprises:
determining a network status of the second terminal; and
based on the network status of the second terminal, switching from the first connection mode to the second connection mode to be connected to the second terminal, or switching from the second connection mode to the first connection mode to be connected to the second terminal.

9. The method according to any one of claims 1 to 8, further comprising:
sending a message for the second terminal to the server in the first connection mode; and
receiving a response for the message for the second terminal from the server in the first connection mode.

10. The method according to any one of claims 1 to 8, further comprising:
sending a message to the second terminal in the second connection mode; and
receiving a response for the message from the second terminal.

11. The method according to any one of claims 8 to 10, wherein based on the network status of the second terminal, switching from the first connection mode to the second connection mode to be connected to the second terminal comprises:
when the network status of the second terminal meets a first condition, switching from the second connection mode to the first connection mode to be connected to the second terminal; and/or
based on the network status of the second terminal, switching from the first connection mode to the second connection mode to be connected to the second terminal comprises:
when the network status of the second terminal does not meet the first condition, switching from the first connection mode to the second connection mode to be connected to the second terminal, wherein the first condition comprises at least one of the following conditions: the second terminal is connectable to the server, and network quality between the second terminal and the server is higher than a threshold.

12. The method according to any one of claims 1 to 11, wherein the method further comprises:
displaying a second interface, wherein the second interface comprises a first control; and
detecting an operation performed by the user on the first control, and enabling a proxy registration function and/or a proxy activation function.

13. The method according to claim 6 or 7, wherein the first message comprises a broadcast message or a multicast message in the second connection mode.

14. The method according to claim 2, wherein the first network connection information further comprises registration information of the second terminal, or the second network connection information further comprises registration information of the second terminal; and the registration information comprises a device identifier allocated by the server to the second terminal.

15. The method according to claim 2, wherein the activation information comprises an activation key.

16. The method according to any one of claims 1 to 15, wherein the first connection mode comprises any one of the following connection modes: the Wi-Fi network and the data network; and/or
the second connection mode comprises a near field connection mode, and the near field connection mode comprises any one of the following connection modes: Bluetooth and near field communication NFC.

17. A device registration method, applied to a second terminal, wherein the second terminal is a terminal that supports a first connection mode and a second connection mode, and the method comprises:
receiving, from a first terminal in the second connection mode, first network connection information required for registering the second terminal; and
connecting to a network in the first connection mode based on the first network connection information.

18. The method according to claim 17, wherein the first network connection information comprises activation information used to activate the second terminal; or
after receiving, from the first terminal in the second connection mode, the first network connection information required for registering the second terminal, the method further comprises:
receiving, from the first terminal in the second connection mode, second network connection information required for activating the second terminal.

19. The method according to claim 18, wherein the first network connection information further comprises information about an access point, or the second network connection information further comprises the information about the access point; and
the information about the access point is used to indicate the second terminal to connect to the access point used for network connection.

20. The method according to claim 19, wherein in a Wi-Fi network, the information about the access point comprises at least one piece of the following information: a service set identifier SSID of the access point and a password of the access point; and in a data network, the information about the access point comprises at least one piece of the following information: a key and a user identifier.

21. The method according to any one of claims 17 to 20, further comprising:
sending a first message when failing to connect to the network in the first connection mode, wherein the first message is used to request information about an updated access point; and
receiving the information about the updated access point from the first terminal.

22. The method according to any one of claims 17 to 21, further comprising:
determining a network status of the second terminal; and
based on the network status of the second terminal, switching from the first connection mode to the second connection mode to be connected to the first terminal, or switching from the second connection mode to the first connection mode to be connected to the first terminal.

23. The method according to claim 21, wherein the first message comprises a broadcast message or a multicast message in the second connection mode.

24. The method according to claim 18 or 19, wherein the first network connection information further comprises registration information of the second terminal, or the second network connection information further comprises registration information of the second terminal; and the registration information comprises a device identifier allocated by a server to the second terminal.

25. The method according to claim 18 or 19, wherein the activation information comprises an activation key.

26. The method according to any one of claims 17 to 25, wherein the first connection mode comprises any one of the following connection modes: the wireless fidelity Wi-Fi network and the data network; and/or
the second connection mode comprises a near field connection mode, and the near field connection mode comprises any one of the following connection modes: Bluetooth and near field communication NFC.

27. A computer-readable storage medium, comprising a program or instructions, wherein when the program or the instructions are executed, the method according to any one of claims 1 to 16 is implemented, or the method according to any one of claims 17 to 26 is implemented.

28. An electronic device, wherein the electronic device comprises a processor and a memory; and
the memory is configured to store computer-executable instructions, and when the device runs, the processor executes the computer-executable instructions stored in the memory, so that the device performs the method according to any one of claims 1 to 16.

29. An electronic device, wherein the electronic device comprises a processor and a memory; and
the memory is configured to store computer-executable instructions, and when the device runs, the processor executes the computer-executable instructions stored in the memory, so that the device performs the method according to any one of claims 17 to 26.

30. A device registration system, wherein the system comprises the device according to claim 28 and the device according to claim 29.
